# EUROPÄISCHE PATENTANMELDUNG

(11) **EP 3 498 103 A1**
(43) Veröffentlichungstag der Anmeldung: **19.06.2019**
(21) Anmeldenummer: 17207167.2
(22) Anmeldetag: 13.12.2017
(51) Int. Cl.: A23J 1/00, A23J 1/14, A23J 3/14

(54) **VERFAHREN ZUR PROZESSÖKONOMISCHEN AB-/AUFTRENNUNG VON KONSTITUENTEN PFLANZLICHER AUSGANGSMATERIALIEN SOWIE DEREN GEWINNUNG UND VERWENDUNG**

(71) Anmelder: Drei Lilien Pvg GmbH&Co. KG, 65193 Wiesbaden (DE)
(72) Erfinder: DIETZ, Max, 65193 Wiesbaden (DE)
(74) Vertreter: Arth, Hans-Lothar

(57) **Zusammenfassung**

Die vorliegende Erfindung betrifft ein prozessökonomisches Verfahren zur Ab- und/oder Auftrennung von Konstituenten bestehend aus
- wasserlöslichen und gelösten Verbindungen umfassend Proteine und/oder Kohlenhydrate und/oder Aromastoffe und/oder Farbstoffe und/oder Fette und/oder Toxine;
- optional wasserlöslichen und ungelösten Verbindungen umfassend Stärke;
- soliden Feststoffen umfassend cellulosebasierte Fasern und/oder ligninreiche Schalen;
eines proteinhaltigen biogenen Ausgangsmaterials.

## Beschreibung

### Hintergrund

Die Zusammensetzung von Pflanzenprodukten, wie Samen, Kernen oder Körnern kann im Wesentlichen in 4 Hauptkonstituente eingeteilt werden: Neutrallipide (8 -40%), Kohlenhydrate (15-35%), Proteine (20-50%) und Faserstoffe (20-40%). Ferner sind in Pflanzenprodukten variable Mengen an Farb- und Geruchsstoffen, Polarlipiden, Antioxidantien, Mineralstoffen u.a.m. enthalten. Die Verwendung der Konstituenten derartiger Pflanzenprodukte hat eine zentrale Bedeutung in der Ernährung von Mensch und Tier. In Pressrückständen oder Vermahlungsprodukten derartiger Pflanzenprodukte sind neben Neutrallipiden auch lipophile Nebenbestandteile enthalten, wie beispielsweise Karotinoide, Lecithine oder lipophile Alkaloide, die bei einer stofflichen Verwertung der Hauptkomponenten und insbesondere der Proteinfraktion, störend sind. Aufgrund der Qualitätserfordernisse für Anwendungen erhaltbarer Produkte aus dem Aufschluss von pflanzlichen Samen und Kernen als Nährmittel für Menschen ist eine ökonomische Nutzbarkeit vieler Pressrückstände oder Mahlprodukte von Pflanzensaaten/-Kernen bisher überwiegend nicht gegeben. Zur Gewinnung von Proteinen aus Pflanzensaaten wurden nass-technische Verfahren vorgeschlagen (DE19643961 C2). Hierbei wird versucht, mit Erdalkalimetall-Lösungen oder anorganischen oder organischen Säuren einer Gewinnung von Proteinen vorzunehmen. Auch hier sind ein vollständiger mechanischer Aufschluss des Saatmaterials sowie eine intensive Mischung des Mahlgutes mit den wässrigen Extraktionsmitteln unter Verwendung von Homogenisatoren erforderlich. Um eine Fraktion mit einen Proteinanteil von über 50% zu erhalten, ist eine Erwärmung des Saatmaterials auf über 70°C erforderlich. Die Proteinfraktion, die unter diesen Bedingungen im wässrigen Medium gelöst werden kann, lässt sich in einer relevanten Menge nur bei einem pH-Bereich von 2,5 bis 4,5 im Anschluss an eine Koagulation der Proteine separieren. Es konnte gezeigt werden, dass die physikalischen Eigenschaften von Proteinen, die mittels nass-technischer Verfahren aus dem Stand der Technik, also mittels einer sauren oder thermischen Koagulation gewonnen worden sind, deutlich schlechter sind, als wenn eine Abtrennung unter neutralen pH-Bedingungen, z. B. mittels einer Ultrazentrifugation, erfolgt ist.

Um die nutritiven und/oder funktionellen Eigenschaften der Proteinfraktionen, die sich durch einen wässrigen Aufschluss aus gepressten oder gemahlenen Pflanzensaaten gewinnen lassen, zu verbessern, kann es erforderlich sein, der Proteinfraktion weitere Verbindungen, wie beispielsweise Kohlenhydrate oder Vitamine oder Antioxidantien, beizumischen. Aus dem Stand der Technik sind keine Verfahren bekannt, mit denen man Proteine während eines Extraktionsprozesses mit anderen Verbindungen beladen und separieren kann, sodass ein Kombinationsprodukt erhalten werden kann, bei dem sich eine physiologische räumliche Anordnung der Verbindungen durch eine Selbstassemblierung eingestellt hat.

Es besteht daher ein Bedarf nach einem Verfahren, mit dem sich die Konstituenten von Pflanzenprodukten, wie Mahlprodukten und Pressrückständen von Pflanzensaaten, mit einem einfachen wässrigen Aufschluss- und Extraktionsverfahren hinsichtlich ihrer Hauptkonstituenten auftrennen und diese fraktionieren lassen, unter Erhalt einer verbesserten Produktqualität. Es besteht ferner ein großer Bedarf an einem nass-technischen Gewinnungsverfahren für Inhaltsstoffe von Pflanzensaaten und -Kernen, das ökonomisch betrieben werden kann. Dies betrifft insbesondere eine Wiederverwendbarkeit der eingesetzten Prozessmittel und insbesondere des Prozesswassers, da bei derartigen Verfahren große Prozesswassermengen mit erheblichen Gehalten an organischem Material (TOC) anfallen. Ferner sind diese Verfahren energieaufwendig, sodass ein großer Bedarf an einem energiearmen Aufschlussverfahren für Pflanzensaaten und -Kerne besteht. Darüber hinaus besteht ein großer Bedarf, ein nass-technisches Verfahren bereit zu stellen, bei dem eine vollständige stoffliche Nutzung der Hauptbestandteile der Pflanzensaat- und Mahlprodukte gewährleistet werden kann, sodass auch reine Fraktionen für Öle, Proteine, Kohlenhydrate sowie Faserstoffe hergestellt werden können, in einer unmittelbar verwendbaren Form.

### Beschreibung

Zum Zwecke einer Separation bzw. Auftrennung der Hauptkonstituenten pflanzlicher Saaten, Körner oder Kerne ist deren Desintegration erforderlich. Eine Desintegration kann durch ein physikalisches Verfahren aus dem Stand der Technik erfolgen, wie beispielsweise mit mechanischen Verfahren, wie einer Schälung/Enthäutung, Zerkleinerung, Quetschung, Pressung oder Vermahlung oder thermischen Verfahren, wie einer Blanchierung. Dabei haben thermische Verfahren den Nachteil, dass sie energieaufwendig sind und Konstituenten der Ausgangsmaterialien thermisch schädigen können, sodass diese nicht mehr oder nur noch eingeschränkt verwertbar sind. Bei den mechanischen Verfahren unterscheiden sich Pressverfahren von anderen desintegrativen Verfahren, indem Zell- und Gewebestrukturen in dem Aufschlussmaterial weitgehend zerstört werden. Derartige desintegrierte pflanzliche Ausgangsmaterialien, wie z. B. Presskuchen, in der Regel sehr hart und hydrophob, sodass nur ein geringes Aufnahmevermögen für Wasser besteht. Presskuchen quellen in Wasser erst über den Verlauf von Tagen auf, es verbleiben unlösliche Aggregate, die ein grobes Sieb nicht passieren. Somit bleibt der Aufschluss bei Verwendung von reinem Wasser unvollständig.

Überraschenderweise wurde gefunden, dass Lösungen von gelösten Aminosäuren und/oder Peptiden eine rasche und vollständige Ab-/Auftrennung der Konstituenten in Pflanzenprodukten, wie Samen, Kernen oder Körnern bewirken. So wurde gefunden, dass die Konstituenten, die sich in Pressrückständen und Mahlprodukten befinden, sich durch eine vollständige Benetzung mit einer derartigen wässrigen Lösung, sehr leicht in einem wässrigen Medium voneinander separieren lassen. Überraschenderweise kommt es insbesondere zu einer Ablösung der Proteine von soliden wasserunlöslichen Konstituenten, wobei die Proteine gleichzeitig in ihre Untereinheiten zerfallen, sodass die gelösten Proteine einen Membranfilter mit einem Siebmaß von 10µm passieren und sehr wahrscheinlich aufgrund einer großen Hydrathülle, z.T. dauerhaft in dem wässrigen Medium gelöst bleiben. Ferner werden Proteine rasch und vollständig sowohl von den wasserunlöslichen Faserverbindungen und Schalenanteilen, gelöst, sodass Letztere sehr rasch sedimentieren, während die Proteine in Lösung bleiben.

Die Ab-/Herauslösung von Proteinen durch die wässrigen Lösungen, enthaltend gelöste Aminosäuren und/oder Peptide, ermöglichte erstmalig die Vereinzelung von Faserstrukturen aus diesen Pflanzenprodukten, die aufgrund ihrer Beschaffenheit als cellulose-basierte Fasern klassifiziert werden können. Ferner stellte sich heraus, dass cellulose-basierte Fasern, bei denen eine Ab-/Herauslösung von Proteinen erfolgt ist, in den wässrigen Aufschlussphasen extrem aufquellen, wodurch sie sich, z. B. mit üblichen Filtertechniken, von den gelösten Proteinen sehr leicht abtrennen lassen. Darüber hinaus wurde gefunden, dass das Löslichkeitsminimum der gelösten Proteine in einen neutralen pH-Bereich verschoben wird, sodass sich die Proteine unter sehr schonenden Bedingungen aggregieren und abgetrennt lassen. Außerdem ist es mit dem Verfahren möglich, die eingesetzten Prozesswasserphasen vollständig wieder zu verwenden und die erhaltbaren Produkte Anwendungen unmittelbar zugänglich zu machen, ohne dass Reststoffe oder Abströme anfallen.

Daher ist die Erfindung gerichtet auf ein Verfahren, das einen nass-technischen vollständigen Aufschluss von pflanzlichen Produkten ermöglicht, insbesondere von pflanzlichen Desintegrationsprodukten, wie Press- und Mahlprodukten von Samen, Kernen und Körnern, zum Zwecke der Gewinnung von reinen Inhaltsstoffen (Konstituenten), wie insbesondere Proteine, Kohlenhydrate, cellulose-basierte Fasern- und lignin-reiche Schalenanteile.

Die Aufgabe der vorliegenden Erfindung somit besteht darin, ein Verfahren bereitzustellen, mit dem die Konstituenten von pflanzlichen Ausgangsmaterialien und insbesondere von Desintegrationsprodukten, wie beispielsweise Pressrückständen und Mahlprodukten von Pflanzensaaten, ohne eine weitere Vorbehandlung, mit einem wässrigen Verfahren ab-/aufgetrennt werden, sodass Hauptkomponenten vollständig voneinander separiert in einer wässrigen Prozessflüssigkeit vorliegen, aus der die gelösten und soliden Konstituenten, in konsekutiven Verfahrensschritten abgetrennt und in reiner Form gewonnen werden können.

### Detaillierte Beschreibung

Die Konstituenten des mit dem erfindungsgemäßen Verfahren behandelbaren proteinhaltigen biogenen Ausgangsmaterialien können im Wesentlichen eingeteilt werden in
- wasserlöslichen und gelösten Verbindungen umfassend Proteine und/oder Kohlenhydrate und/oder Aromastoffe und/oder Farbstoffe und/oder Fette und/oder Toxine;
- optional wasserlöslichen und ungelösten Verbindungen umfassend Stärke;
- soliden Feststoffen umfassend cellulosebasierte Fasern und/oder ligninreiche Schalen. Überraschenderweise wurde gefunden, dass wässrige Lösungen, die Aminosäuren und/oder Peptide in gelöster Form enthalten, eine Ablösung von Proteinen von anderen Konstituenten eines pflanzlichen Ausgangsmaterials bewirken, wodurch es zu einer vollständigen Hydrierung der Proteine kommt und diese sich aus dem zuvor bestehende Verbund zwischen und unter den Konstituenten das Ausgangsmaterials lösen und anschließend die verschiedenen Konstituenten in vereinzelbarer und reiner Form vorliegen. Derartig hydratisierte Proteine haben ein niedriges spezifisches Raumgewicht und bleiben daher in der wässrigen Aufschlusslösung in Schwebe. So lagen in einer erfindungsgemäßen wässrigen Aufschlusslösung gelöst vorliegende Proteine, aus einem RapsPresskuchen Aufschlusses, noch nach 6 Wochen gelöst in Form einer trüben Lösung vor und konnten sodann mit dem erfindungsgemäßen Aggregationsverfahren separiert werden.

Es wurde gefunden, dass wässrige Lösungen, die gelöste Aminosäuren und/oder Peptide enthalten, einen raschen Zerfall von Pressrückständen oder Mehlen in ihre Bestandteile bewirken, was nicht der Fall war bei reinem Wasser, einer Alkalilauge oder einer sauren Lösung. Es konnte gezeigt werden, dass die Ab- bzw. Auftrennung der Konstituenten des pflanzlichen Ausgangsmaterials an den Grenzflächen der Konstituenten des Ausgangsmaterials stattfindet, da praktisch keine Anhaftungen an den Oberflächen der soliden unlöslichen oder ungelösten Feststoffe, wie denen von Faserstoffen, Schalen oder komplexen Kohlenhydratverbindungen, vorlagen. Eine hohe Effektivität dieses Ab-/und Auftrennungsverfahrens liegt bereits bei Raumtemperatur vor. Eine solche rückstandsfreie Abtrennung von Oberflächenanhaftungen an den soliden Konstituenten der Ausgangsmaterialien konnte durch andere Lösungen nicht oder nicht unter den gleichen Bedingungen vorgenommen werden.

Die Effektivität des Verfahrens konnte sowohl für die Verwendung wässriger Lösungen einzelner gelöster Aminosäuren als auch von gelösten Peptiden, die diese Aminosäuren oder Funktionalitäten dieser Aminosäuren enthielten, als auch für Kombinationen verschiedener gelöster Aminosäuren sowie von gelösten Peptiden dargestellt werden.

Bevorzugt ist ein Verfahren zur Separation von organischen Konstituenten pflanzlicher Ausgangsmaterialien, bei dem eine Ab-/Auftrennung der Konstituenten durch eine wässrige Lösung, enthaltend gelöste Aminosäuren und/oder Peptide, erreicht wird.

Die erfindungsgemäßen Verfahren können mit einer oder verschiedenen gelösten Aminosäuren und/oder von gelösten Oligo-bzw. Polypeptiden mit einer unterschiedlichen Aminosäuresequenz oder verschiedenen gelösten Oligo- bzw. Polypeptiden, die jeweils Oligo- bzw. Polypeptide einer erfindungsgemäßen Aminosäure sind, durchgeführt werden, solange eine Löslichkeit dieser in einem wässrigen Medium gegeben ist. So konnte gezeigt werden, dass auch hydrophobe Aminosäuren geeignet sind, die erfindungsgemäße Ab-- und Auftrennung von Proteinen zu bewerkstelligen, sofern sich diese in Lösung befanden, wie beispielsweise Phenylalanin in einem Oligopeptid mit Lysin. Insofern konnte gezeigt werden, dass prinzipiell alle gelösten Aminosäuren, bzw. Oligo- und Polypeptide zur Durchführung des Ab-/Auftrennverfahrens geeignet sind. Dabei ist es erforderlich, dass die Aminosäuren und/oder Peptide in einer in Wasser vollständig gelösten Form vorliegen und in dieser dem aufzuschließenden organischen Material hinzugegeben werden oder mit dieser, in einer in Wasser gelösten Form, in Kontakt treten können. Besonders geeignet sind die Aminosäuren Arginin, Lysin, Histidin, Phenylalanin und Glutamin.

Aber auch andere alpha-Carbonsäuren sind geeignet. Ferner geeignet sind Di- Tri- oder Oligipeptide sowie Polypeptide, die aus einer, zwei oder mehreren Aminosäuren zusammengesetzt sind. Bevorzugt sind kurzkettige Peptide, z. B. RDG. Besonders bevorzugt sind Peptide, die aus Aminosäuren bestehen, die sowohl hydrophobe als auch hydrophile Seitengruppen aufweisen, wie beispielsweise (Angaben gemäß Namensalphabt der Aminosäuren) GLK, QHM, KSF, ACG, HML, SPR, EHP oder SFA. Weiter besonders bevorzugt sind Peptide, die sowohl hydrophobe und kationische und/oder anionische Seitengruppen aufweisen, wie beispielsweise RDG, BCAA, NCR, HIS, SPR, EHP oder SFA. Weitere Beispiele mit 4 Aminosäuren sind NCQA, SIHC, DCGA, TSVR, HIMS oder RNIF oder mit 5 Aminosäuren sind HHGQC, STYHK, DCQHR, HHKSS, TSSHH, NSRR. Besonders bevorzugt sind RDG, SKH oder RRC.

Die Verwendung von Aminosäuren ist dabei besonders vorteilhaft, da sie physiologische Konstituenten von Proteinen sind und in einer zu gewinnenden Proteinfraktion verbleiben können. Bevorzugt ist eine wässrige Lösung, in der die erfindungsgemäßen gelösten Aminosäuren und/oder Peptide ohne weitere Zusätze bei einem sich selbst eingestellten pH der Lösung vorliegen.

Weiterhin unerwartet war der Effekt der Verwendung einer Lösung von gelösten Aminosäuren und/oder Peptiden auf die Löslichkeitseigenschaften der mit den Verfahren gelösten Proteine. Aus der Literatur ist bekannt, dass wässrig gelöste Pflanzenproteine ein Löslichkeitsminimum bei einem pH zwischen 2,5 und 4,5 ausweisen und sich durch Hinzugabe von Säuren oder entsprechender Puffersysteme in diesem pH Bereich koagulieren lassen, während dies nicht der Fall ist bei einem pH-Bereich, der über 5 liegt. Bei einer Koagulation kommt es zu einer Entfaltung der Proteine, wodurch die Tertiärstruktur vollständig verloren geht und in Abhängigkeit vom pH es auch zu einem Verlust der Sekundärstruktur kommt. Hierdurch werden die physiko-chemischen Eigenschaften derartig degenerierter Proteine entscheidend verändert. U. a. wird das Wasserbindungsvermögen stark herabgesetzt. Der Denaturierungsgrad ist dabei invers mit dem pH bei einer Koagulation mit einer Säure korreliert.

Überraschenderweise kam es zu einer sehr raschen und vollständigen Kondensation von Proteinen, die mit gelösten Aminosäuren und/oder Peptiden ab/aufgetrennt worden waren und in dem wässrigen Medium gelöst vorlagen, bereits durch die Hinzugabe von minimalen Mengen von Säuren. Es zeigte sich, dass eine vollständige Kondensierung der gelösten Proteine bei einem neutralen pH, also pH 7 oder in einem annähernd neutralen pH-Bereich, also bei einem pH zwischen 6 und 8, erfolgte. Derartige Kondensate können durch eine starke Agitation in feinste Partikel zerteilt werden. Somit kann in überraschender und überaus vorteilhafter Weise mit den erfindungsgemäßen Verfahren das Löslichkeitsminimum von gelösten Proteinen in einen pH-Bereich verschoben werden, der größer ist als 5. Ferner überraschen war, dass es bei den Kondensaten zu keinem Verlust der Tertiärstruktur kam, wodurch die physiko-chemischen Eigenschaften der erhaltenen Proteinkondensate erhalten blieben. Darüber hinaus konnte gezeigt werden, dass der einmal

angeregte Kondensationsprozess sich selbstständig fortsetzt, ohne dass es der Zugabe eines der hierin aufgeführten Kondensationsmittel bedarf. Hierdurch kann eine vollständige spontane Kondensation von überwiegend nicht denaturierten Proteinen erreicht werden, ohne einen relevanten Einschluss von Verbindungen, die zur Initiierung der Kondensationsreaktion zugesetzt worden sind. Somit kann in überraschender und überaus vorteilhafter Weise mit den erfindungsgemäßen Verfahren das Löslichkeitsminimum von gelösten Proteinen in einen pH-Bereich verschoben werden, der größer ist als 5. Ferner überraschen war, dass es bei den Aggregaten zu keinem Verlust der Tertiärstruktur kam, wodurch die physiko-chemischen Eigenschaften der erhaltenen Proteinkondensate erhalten blieben. Darüber hinaus konnte gezeigt werden, dass der einmal angeregte Aggregationsprozess sich selbstständig fortsetzt, ohne dass es der Zugabe eines der hierin aufgeführten Aggregationsmittel bedarf. Hierdurch kann eine vollständige spontane Aggregationvon überwiegend nicht denaturierten Proteinen erreicht werden, ohne einen relevanten Einschluss von Verbindungen, die zur Initiierung der Aggregationsreaktion zugesetzt worden sind.

Dies ist besonders vorteilhaft, da hierdurch vorteilhafte Effekte auf ein Aufreinigungsverfahren der erhaltenen Proteinmasse, wie dies im Stand der Technik üblich ist, verzichtet werden kann, ein nur ein geringer Bedarf an Aggregationsmitteln besteht und aufwendige Aufreinigungsschritte der Prozesslösung, z. B. einer Neutralisation einer sauren Prozesslösung, entfallen. Ferner steht die Prozesslösung für eine Wiederverwendung in einer anderen Prozessstufe unmittelbar zur Verfügung. Ferner konnte dokumentiert werden, dass die erhaltbaren Proteinprodukte, infolge der geringeren Denaturierung, verbesserte Produkteigenschaften aufweisen. Somit kann mit dem erfindungsgemäßen Verfahren eine Abtrennung von Proteinen bei einem neutralen pH ermöglicht werden, wodurch sich die funktionellen Eigenschaften der abgetrennten Proteine deutlich verbessern lassen. Daher ist eine bevorzugte Ausführungsform des erfindungsgemäßen Verfahrens, die Lösung von Proteinen in/mit einer Aminosäure und/oder Peptid-Lösung, zur Verschiebung des Löslichkeitsminimums der gelösten Proteine in einen pH-Bereich von vorzugsweise > 5, mehr bevorzugt von > 5,5, weiter bevorzugt von > 6 und weiter bevorzugt von 7. Ferner ist bevorzugt ist die Herstellung eines Löslichkeitsminimums der gelösten Proteine von < 13, weiter bevorzugt von < 12, noch weiter bevorzugt von < 11 und weiter bevorzugt von < 10. Besonders bevorzugt ist eine Verschiebung des Löslichkeitsminimums der gelösten Proteine auf 7.

Bevorzugt ist ein Verfahren, bei dem eine Erhöhung des Löslichkeitsminimums von gelösten Proteinen erreicht wird.

Bevorzugt ist ein Verfahren, bei dem das Löslichkeitsminimum von gelösten Proteinen in einen pH-Bereich zwischen 6 und 8 verschoben wird.

Bevorzugt ist ein Verfahren zur Aggregationund Separation von nicht oder annähernd nicht degenerierten/koagulierten Proteinen, indem in einer wässrige Lösung, enthaltend gelöste Aminosäuren und/oder Peptide, gelöste Proteine durch ein Aggregationsmittel kondensiert werden. Bevorzugt sind nicht oder annähernd nicht degenerativ veränderte /koagulierte Proteine, erhaltbar durch eine Aggregationgelöster Proteine.

Bevorzugt ist ein Verfahren, bei dem eine Verschiebung des Löslichkeitsminimums in einen pH-Bereich zwischen 6 und 8 durch eine Lösung von gelösten Aminosäuren und/oder Peptiden erfolgt und die gelösten Proteine durch eine Einstellung des pH der Lösung auf einen Wert zwischen 6 und 8 aggregierbar und separierbar sind.

Ferner konnte überraschenderweise gezeigt werden, dass bei den Proteinen, bei denen das Löslichkeitsminimum durch die gelösten Aminosäuren und/oder Peptide in einen neutralen oder annähernd neutralen Bereich vorschoben worden ist, sich die gelösten und hydratisierten Proteine mit eine Vielzahl ionischer oder nicht-ionischer Verbindungen ebenfalls aggregieren lassen. So konnte beispielweise mit einer pH-neutralen CaCl₂-Lösung, aber auch Lösungen, enthaltend Silikat und/oder Carbonat-Anionen, eine erfindungsgemäße Aggregation erreicht werden. Die Proteinaggregate zeichnen sich dabei dadurch aus, dass sie sehr voluminöse Raumstrukturen bilden, die nur eine geringe Tendenz zur Sedimentation aufweisen, aufgrund einer großen Hydrathülle. Proteinaggregate oder die kompaktierte Masse von Aggregate, sind bei einer Resuspendierung in einem Wasser rasch löslich, während dies nicht oder nur zu einem geringen Teil der Fall ist, bei mit Säure koagulierten Proteinen.

Überraschenderweise hat sich gezeigt, dass gelöste kationische Aminosäuren und/oder gelöste Peptide, die kationische Aminosäuren enthalten oder eine positive Gesamtladung aufweisen, besonders geeignet sind, um die erfindungsgemäße Erhöhung des Löslichkeitsminimums von gelösten Proteinen zu ermöglichen. Besonders bevorzugt sind daher gelöste kationische Aminosäuren und/oder gelöste Peptide, die kationische Aminosäuren enthalten oder eine positive Ladung aufweisen. Besonders bevorzugt sind Arginin, Lysin, Histidin, sowie deren Derivate.

Bevorzugt ist ein Verfahren, bei dem eine Erhöhung des Löslichkeitsminimums von gelösten Proteinen durch gelöste kationische Aminosäuren und/oder gelöste Peptide, enthaltend kationische Aminosäuren, erreicht wird.

Weiterhin überraschend war, dass die Proteine, bei denen mittels der erfindungsgenmäßen Aminosäure- und/oder Peptidlösungen eine Verschiebung des Löslichkeitsminimums in einen neutralen pH-Bereich erfolgt war und eine Aggregation der gelösten Proteine durch eine pH-Werteinstellung in diesen Bereich erfolgt war, die aggregierten und aus dem wässrigen Medium separierten Proteine vollständig oder fast vollständig geruchs- und geschmacks-frei waren und auch keine oder fast keine Farbstoffe enthielten, die sich durch ein wässriges Medium herauslösen lassen. Ferner lag bei der erhaltenen Proteinfraktion ein neutraler pH vor. Derartig gewonnenen Proteine ließen sich bei einer Resuspendierung in Wasser sehr leicht lösen. Überraschenderweise wurde gefunden, dass insbesondere kationische Aminosäuren und/oder Peptide, die gelöst einer solchen Suspension hinzugegeben wurden, bereits in sehr geringer Konzentration eine Hydratation der Proteine bewirkten, die dazu führte, dass derartig hydratisierte und aggregierte Proteine ein sehr hohes Wasserbindungsvermögen erlangten. Dies wurde festgestellt, indem die hydratisierten Proteine aggregiert und mit einem Filter (Siebmaß 10µm) in einer Unterdrucknutsche von freiem Wasser befreit wurden. Der nicht mehr fließfähige Rückstand wurde gewogen und in einem Trockenschrank getrocknet und das Trockengewicht bestimmt. Aus der Gewichtsdifferenz im Verhältnis zum Trockengewicht wurde das Wasserbindungsvermögen berechnet. Dieses betrug für derartig resuspendierte Proteine zwischen 430 und 850 Gew%. Es wurde dann gefunden, dass das Wasserbindungsvermögen der gleichen Proteine, die mittels eines Extraktionsprozesses aus den Ausgangsmaterialien gewonnen worden waren und bei denen ein Löslichkeitsminimum bei einem pH zwischen 2,8 und 4,2 vorlag, das Wasserbindungsvermögen nach einer 10 stündigen Resuspendierung in Wasser zwischen 140 und 220 Gew% betrug, während das Wasserbindungsvermögen bei den gleichen Proteinen, wenn sie in einer Lösung mit gelösten Aminosäuren und/oder Peptiden suspendiert oder resupendiert wurden, auf Werte zwischen 450 und 650Gew% anstieg.

Daher werden in einer bevorzugten Verfahrensausführung koagulierte Proteine mittels einer Aminosäure- und/oder Peptid-Lösung suspendiert und/oder resuspendiert und hydratisiert, wodurch sie ein Wasserbindungsvermögen erlangen von vorzugsweise > 400 Gew%, mehr bevorzugt > 500 Gew%, weiter bevorzugt > 600 Gew% und noch weiter bevorzugt > 700 Gew%.

Bevorzugt ist ein Verfahren zur Hydratisierung von koagulierten Proteinen durch eine Suspendierung in einer Lösung gelöster Aminosäuren und/oder Peptiden.

Bevorzugt sind kationische Aminosäuren und/oder Peptide. Die bevorzugte Konzentration der Aminosäuren und/oder Peptide, die in der Suspension mit zu hydratisierenden Proteinen vorliegt, beträgt zwischen 10µmol und 3 mol/l, mehr bevorzugt zwischen 10µmol und 1 mol/l, weiterbevorzugt zwischen 1 mmol und 0,5 mol/l. Die Temperatur, bei der die erfindungsgemäße Hydratation von Proteinen erfolgt, beträgt vorzugsweise zwischen 5 und 90°C, mehr bevorzugt zwischen 10 und 60°C und weiter bevorzugt zwischen 15 und 45°C. Der pH der Lösung, in der die erfindungsgemäße Hydratation von Proteinen erfolgt, liegt vorzugsweise zwischen 5,5 und 13, weiter bevorzugt zwischen 6,5 und 12 und weiter bevorzugt zwischen 7,5 und 11,5. Die Dauer, die zur vollständigen Hydratation der Proteine erforderlich ist, hängt von den übrigen Prozessparametern ab und ist daher individuell zu bestimmen. Bevorzugt ist eine Dauer zwischen 5 Minuten und 5 Tagen, mehr bevorzugt zwischen 10 Minuten und 1 Tag und weiter bevorzugt zwischen 15 Minuten und 1 Stunde.

Bevorzugt ist ein Verfahren, bei dem eine Hydratisierung von Proteinen mittels Aminosäure- und/oder Peptid-Lösungen erfolgt.

In einer bevorzugten Verfahrensausführung werden mechanisch desintegrierte pflanzliche Ausgangsmaterialien in eine wässrige Lösung, enthaltend eine oder mehrere Aminosäuren und/oder Peptide in gelöster Form, gegeben und hierin belassen, bis eine vollständige Ab-/Auftrennung der Hauptkonstituenten der Ausgangsmaterialien stattgefunden hat und diese sich in vereinzelbarer Form hierin lösen bzw. suspendiert vorliegen. Das Gewichtsverhältnis zwischen dem Ausgangsmaterial und der wässrigen Lösung beträgt dabei vorzugsweise zwischen 1:3 und 1:1.000, mehr bevorzugt zwischen 1:8 und 1:500 und weiter bevorzugt zwischen 1:10 und 1:200. Die Temperatur, bei der dies erfolgt, ist frei wählbar, bevorzugt ist eine Temperatur zwischen 10 und 120°C, mehr bevorzugt zwischen 15 und 90°C und weiter bevorzugt zwischen 20 und 60°C. Vorzugsweise erfolgt eine kontinuierliche oder diskontinuierliche Durchmischung. Die Dauer der Prozessstufe, in der eine Ab-/Auftrennung und eine Verteilung der Konstituenten des Ausgangsmaterials in einem Wasservolumen gleichzeitig abläuft, ist von den Prozessparametern abhängig und muss individuell ermittelt werden. Eine solche Prüfung kann beispielsweise erfolgen, indem aus dem agitierten Lösungsgemisch eine repräsentative Probe entnommen und mit einem Sieb (Siebmaß 100µm) filtriert wird. Sofern im Siebrückstand keine Aggregate verschiedener Konstituenten der Ausgangsmaterialien mehr erkennbar sind und sich die soliden Feststoffe leicht vereinzeln lassen, ist der Prozess abgeschlossen.

Überraschenderweise wurde dann gefunden, dass es durch Tränken der pflanzlichen Ausgangsmaterialien mit wässrigen Lösungen, in denen Aminosäuren und/oder Peptide in gelöster Form vorlagen, sehr rasch zu einer vollständigen Durchdringung der wässrigen Lösung durch das pflanzliche Ausgangsmaterials kommt, welches dabei leicht quillt. Durch eine anschließende Hinzugabe von Wasser wurde sodann eine vollständige Lösung der wasserlöslichen Konstituenten des Ausgangsmaterials ermöglicht. Es zeigte sich, dass bereits geringe Konzentrationen von gelösten Aminosäuren und/oder Peptiden, wie z. B. von Arginin oder dessen Derivaten, ausreichen, um eine derartige Ab-/Auftrennung der Verbundstrukturen der Ausgangsmaterialien zu erzielen. Es wurde gefunden, dass es durch eine Verteilung eines vollständig durchtränkten pflanzlichen Ausgangsmaterials in einem ausreichend großen Wasservolumen zu einem sofortigen und vollständigen Lösen der Konstituenten des Ausgangsmaterials kommt, sodass die verschiedenen Konstituenten bereits unmittelbar in vereinzelter Form vorliegen. Diese Verfahrensdurchführung ermöglicht somit eine erhebliche Einsparung von Aminosäuren und/oder Peptiden, die zu einer erfindungsgemäßen Separation der Konstituenten der Ausgangsmaterialien erforderlich sind.

Bevorzugt ist ein Verfahren zur Separation von Konstituenten pflanzlicher Ausgangsmaterialien, bei dem eine Ab-/Auftrennung der Konstituenten des pflanzlichen Ausgangsmaterials durch eine Durchtränkung des pflanzlichen Ausgangsmaterials mit einer wässrigen Lösung, enthaltend gelöste Aminosäuren und/oder Peptide, erfolgt.

Durchtränken bedeutet hierbei, dass bei einem fein zerteilten durchtränkten Material dieses vollständig feucht (Feuchtegehalt > 20 Gew%) ist. Bevorzugt ist die Beaufschlagung des pflanzlichen Ausgangsmaterials mit einem Volumen der wässrigen Lösung, enthaltend gelöste Aminosäuren und/oder Peptide, in einem Massenverhältnis von 1:0,5 bis 1:10, mehr bevorzugt zwischen 1:1 und 1:8 und weiter bevorzugt zwischen 1:1,2 und 1:4. Die Temperatur, bei der die Durchtränkung erfolgen kann, ist frei wählbar, bevorzugt ist eine Temperatur zwischen 6 und 90°C, weiter bevorzugt zwischen 10 und 60°C und weiter bevorzugt zwischen 18 und 40°C.

In einer bevorzugten Verfahrensausführung werden für den Prozessschritt der Ab-/Auftrennung des pflanzlichen Ausgangsmaterials, der mittels eines Durchtränkungs- oder Quellungsverfahrens erfolgt, wässrige Lösungen mit Aminosäuren und/oder Peptiden, die hierin gelöst vorliegen, in einer Konzentration von vorzugsweise 1 mmol/l bis 5 mol/l, mehr bevorzugt von 50mmol/l bis 1mol/l und weiter bevorzugt zwischen 100mmol/l und 400mmol/l vorliegen, hinzugegeben. Um eine vollständige Ab-/Auftrennung der Konstituenten des pflanzlichen Ausgangsmaterials zu erreichen, ist es bevorzugt, eine Verweilzeit zwischen der vollständigen Durchtränkung oder der vollständigen Quellung und der Durchführung dem nächsten Prozessschritt einzuhalten, die vorzugsweise zwischen 5 Minuten und 12 Stunden, weiter bevorzugt zwischen 30 Minuten und 6 Stunden und weiter bevorzugt zwischen 45 Minuten und 3 Stunden beträgt.

In einer bevorzugten Ausführungsform wird nach der Prozessschritt, in der eine Ab-/Auftrennung der Konstituenten des pflanzlichen Ausgangsmaterials erfolgt ist, eine Verteilung und Vereinzelung der Konstituenten des pflanzlichen Ausgangsmaterials durchgeführt. Überraschenderweis wurde gefunden, dass die erfindungsgemäße Separation von Konstituenten pflanzlichen Ausgangsmaterials dadurch in besonders vorteilhafter Form ermöglicht wird, indem ein ausreichend großes Wasservolumen zur Verteilung (Verteilungsvolumen) und Vereinzelung der soliden wasserunlöslichen und wasserlöslichen gelösten Konstituenten des Ausgangsmaterials bereitgestellt wird, wodurch besonders reine Fraktionen unmittelbar erhalten werden. Es wurde gefunden, dass, wenn ein nicht ausreichend großes Wasservolumen in der Verteilungsphase bereitgestellt wird, die mittels filtrativer Techniken erhaltbaren soliden unlöslichen Konstituenten des pflanzlichen Ausgangsmaterials nicht vereinzelbar sind und Anhaftungen von wasserlöslichen Konstituenten des Ausgangsmaterials aufweisen. Daher ist ein entscheidendes Kriterium zur erfindungsgemäßen Verteilung und Vereinzelung der soliden Konstituenten des Ausgangsmaterials, die Bereitstellung eines ausreichend großen Verteilungsvolumens. Die Ermittlung eines ausreichend großen Wasservolumens, das sowohl für die Vereinzelung der soliden Konstituenten des Ausgangsmaterials, als auch für einen vollständigen oder nahezu vollständigen Ablauf einer Kondensation und/oder Aggregation und/oder Komplexierung der hierin gelösten wasserlöslichen Verbindungen mit den erfindungsgemäßen Kondensierungsmitteln ermöglicht, kann durch die im Folgenden beschriebenen Untersuchungsverfahren leicht durch einen Fachmann erfolgen.

Bevorzugt ist ein Verfahren zur Ermittlung eines Wasservolumens, das ausreichend ist, um solide wasserunlösliche Konstituenten eines pflanzlichen Ausgangsmaterials anhaftungsfrei zu vereinzeln und eine Kondensation/Aggregation/Komplexierung von wasserlöslichen Verbindungen des Ausgangsmaterials, die in gelöster Form vorliegen, mit einem Aggregationsmittel vollständig oder nahezu vollständig zu aggregieren.

Bevorzugt bei dieser Verfahrensausführung ist ein Verhältnis des Wasservolumens (Verteilungsvolumens) zur Trockenmasse des Ausgangsproduktes von 5:1 bis 500:1, mehr bevorzugt von 10:1 bis 150:1 und weiter bevorzugt von 15:1 bis 50:1. Die Art der Einbringung bzw. in Kontaktbringung des Ab-/Auftrennungsgemisches und der Wasserphase dieses Prozessschritts ist beliebig. Bevorzugt ist ein Eintrag, der mittels eines Hochleistungsschermischers oder eines anderen Intensivmischers, zusammen mit der Wasserphase erfolgt. Der Verteilungsprozess kann bei einer beliebigen Temperatur erfolgen, bevorzugt ist ein Temperaturbereich der wässrigen Suspension zwischen 6 und 90°C, weiter bevorzugt zwischen 10 und 60°C und weiter bevorzugt zwischen 18 und 40°C. Die Dauer des Verteilungsprozesses ist beliebig, bevorzugt ist eine Dauer von 1 Minute bis 24 Stunden, mehr bevorzugt von 5 Minuten bis 5 Stunden und weiter bevorzugt von 10 Minuten bis 1 Stunde.

Sofern die Untersuchung zur Vollständigkeit des Verteilungsprozesses eine ausreichende Separation der Konstituenten des Ausgangsmaterials ergeben hat, ist eine unmittelbar anschließende rückstandsfreie Separation der voneinander gelösten organischen Verbindungen und soliden Feststoffen möglich.

In einer weiteren bevorzugten Ausführungsform wird in einem weiteren Verfahrensschritte eine Abtrennung der soliden wasserunlösliche oder nicht gelösten Feststoffe von dem wässrigen Verteilungsgemisch vorgenommen, die in einer Ausführungsform im Wesentlichen durch die hierin befindlichen Faserstoffe und komplexen Kohlenhydrate repräsentiert werden. Es wurde gefunden, dass ein entscheidendes Kriterium zum Erhalt einer sensorisch fehlerfreien Fraktion aggregierter und kompaktierter löslicher Konstituenten des Ausgangsmaterials, die vollständige oder nahezu vollständige Separation von soliden Feststoffen ist. Es konnte gezeigt werden, dass dieses Kriterium dann erfüllt ist, wenn nach einer Expansion/Hydratation löslicher Verbindungen und der Faserstoffe sowie Quellung komplexer Kohlenhydrate, die Suspension der gelösten wasserlöslichen Verbindungen einen Filter mit einem Siebmaß von 10µm frei passiert hat. Derartige Lösungen/Suspensionen sind faserfrei oder annähernd faserfrei. Annähernd heißt dabei > 98 Gew%. Der Begriff solider Feststoff beschreibt hierin Raumgebilde, die einen Filter mit einem Siebmaß von 10µm nicht passieren.

Ferner konnte gezeigt werden, dass komplexe Kohlenhydrate (z.B. Stärkekörner), die z.T. Dimensionen von 0,5 - 2 mm aufweisen, mittels eines Vorsiebs selektiv abtrennt werden können, da je nach Ausgangsmaterial die Faserstoffe mit dem Volumenstrom ein solches Vorsieb vollständig passieren. Daher ist das Verfahren auch geeignet für eine selektive Abtrennung von komplexen Kohlenhydraten, wie beispielsweise Stärkekörnern.

Ferner konnte gezeigt werden, dass durch die erfindungsgemäße Verfahrenstechnik faser-freie Lösungen erhaltbar sind, in denen vorzugsweise > 98 Gew%, mehr bevorzugt > 99 Gew% und am meisten bevorzugt > 99,5 Gew% der Masse an Proteinen enthalten ist, die ursprünglich im Ausgangsmaterial vorlag.

In einer weiteren bevorzugten Ausführungsform erfolgt in einem weiteren Verfahrensschritt eine Kondensation und/oder Aggregation und/oder Komplexierung der gelösten Proteine und/oder anderer gelöster Verbindungen des Filtrats des zuvorigen Prozessschritts. Ziel dieses Aggregationsprozesses ist es, einen Zusammenschluss von gelösten bzw. hydratisierten Proteinen und/oder anderen gelösten Verbindungen zu bewerkstelligen, der es ermöglicht, eine Proteinmasse bzw. Produktmasse auszubilden, die sich mittels bekannter Trenntechniken separieren und möglichst prozesswasser-arm gewinnen lässt. Hierzu sind insbesondere Aggregationsmittel, die in gelöster Form vorliegen, geeignet. Besonders geeignete Aggregationsmittel sind beispielsweise Säuren, hierunter bevorzugt organischen Säuren, wie beispielsweise Zitronensäure oder Milchsäure, ferner Salze, wie beispielsweise NaCl, ferner Komplexbildner, wie beispielsweise EDTA, aber auch Adsorptionsmittel. Weiterhin sind lösliche zweiwertige Kationen bevorzugt, wie Aluminium-, Calcium- und Magnesium-Salze. Ferner Silikate und Carbonate. Ferner sind Kombinationen der hierin aufgeführten Aggregationgsmittel vorteilhaft, wie z. B. eine Kombination aus Zitronensäure und Aluminiumchlorid. Bevorzugt ist die Verwendung wässriger Lösungen der Aggregationsmittel, umfassend organische Säuren, wie Zitronensäure oder Ascorbinsäure. Die Temperatur, bei der eine Kondensation und/oder Aggregation und/oder Komplexierung erfolgt, kann prinzipiell frei gewählt werden. Bevorzugt ist eine Temperatur zwischen 6 und 90°C, weiter bevorzugt zwischen 10 und 60°C und weiter bevorzugt zwischen 18 und 40°C. Der pH der wässrigen Lösung enthaltend gelöste Verbindungen, bei der die erfindungsgemäße Kondensation und/oder Aggregation und/oder Komplexierung der gelösten Proteine und/oder anderer gelöster Verbindungen erfolgt, liegt vorzugsweise in einem Bereich zwischen 5 und 13, mehr bevorzugt zwischen 6 und 12 und weiter bevorzugt zwischen 6,5 und 11. Eine Aggregation kann nach kurzer Verweilzeit mit dem bloßen Auge erkannt werden. Die Auswahl der geeigneten Konzentration kann dadurch erfolgen, indem eine Probelösung, bei der eine Aggregation erfolgt ist, zentrifugiert wird und der Überstand erneut mit Kondensierungsmitteln behandelt wird. Sofern sich keine sichtbaren Kondensate/Aggregate/Komplexe mehr bilden und/oder abtrennen lassen, liegen in der Lösung < 6 Gew% vorzugsweise < 4 Gew% und am meisten bevorzugt < 2 Gew% der zu aggregierenden gelösten Verbindungen, bzw. gelösten Proteine vor. Die erforderliche Menge an Aggregationsmittel(n) ist der Prozessflüssigkeit dann hinzugefügt worden, wenn in einem Überstand einer Zentrifugation einer Probe der Prozessflüssigkeit durch die Hinzugabe eines Aggregationsmittels keine Aggregation von gelösten bzw. hydratisierten Proteinen erfolgt. Das vorzugsweise eine oder mehrere gelöste Aggregationsmittel, das/die zusammen und/oder konsekutiv der Lösung, enthaltend gelöste Verbindungen, hinzugegeben wird/werden, kann/können in kontinuierlicher und/oder diskontinuierliche Form, tropfen bis strahlweise, hinzugegeben werden. Bei einer Applikation als Feststoff ist es bevorzugt, das/die Aggregationsmittel in einer gepulverten Form hinzuzugeben.

Das oder die hinzugegebene(n) Aggregationsmittel werden in einer bevorzugten Verfahrensausführung mit einem Rührwerk und mit einer geringen Agitation der Prozessflüssigkeit gemischt. Dabei ist auf eine vollständige Durchmischung zu achten. Die Dauer der Mischung ist prinzipiell frei wählbar. In einer bevorzugten Verfahrensausführung erfolgt diese nur über die Dauer der Hinzugabe eines oder mehrerer Aggregationsmittel(s) oder für eine Dauer zwischen 10 Sekunden und 5 Minuten, mehr bevorzugt zwischen 20 Sekunden und 2 Minuten.

Überraschenderweise zeigte sich, dass es nach Einbringung der erfindungsgemäßen Aggregationsmittel, es im Verlauf von wenigen Sekunden bis wenigen Minuten zu einer Kondensation und/oder Aggregation und/oder Komplexierung von zuvor gelösten Verbindungen kommt, die als Raumgebilde mit dem bloßen Auge erkennbar werden, unter gleichzeitigem Aufklaren der zuvor trüben wässrigen Lösung. Die entstehenden Aggregate nehmen im Verlauf an Größe, auch ohne weiteren Zusatz von Aggregationsmitteln, zu und beginnen im Verlauf von wenigen Minuten bis wenigen Stunden zu sedimentieren, wodurch sie als Fraktion sehr leicht von der dann geklärten Wasserphase separiert und weiter kondensiert werden können. Der pH-Wert, der vorzugsweise nicht unterschritten wird beträgt 4,5, mehr bevorzugt 5,5 und weiter bevorzugt 6.

In einer besonders bevorzugten Ausführungsart wird daher im Anschluss an den Zusatz eines oder mehrerer Aggregationsmittel eine Standzeit eingehalten, in der keine oder nur eine minimale Durchmischung des Gemisches erfolgt. In analoger Weise kann die erforderliche Zeit der Aggregationsphase ermittelt werden, vorzugsweise beträgt diese zwischen 5 Minuten und 10 Stunden, weiter bevorzugt zwischen 10 Minuten und 5 Stunden und weiter bevorzugt zwischen 15 Minuten und 2 Stunden. In einer bevorzugten Verfahrensausführung werden die kondensierten/aggregierten/komplexierten wasserlöslichen Verbindungen/Proteine in Form eines Sediments gewinnbar gemacht.

Bevorzugt ist ein Verfahren zur Gewinnung eines proteinhaltigen Sediments, bestehend aus kondensierten/aggregierten/komplexierten Proteinen.

Überraschenderweise wurde gefunden, dass Geruchs- und Geschmacksstoffe, die durch das Aufschlussverfahren ebenfalls gelöst werden und in der Lösung des Verteilungsgemisches gelöst vorliegen, durch die erfindungsgemäßen Verfahren zur Kondensation/Aggregation/Komplexierung der Proteine nicht an/mit die/den sich ausbildenden Protein-Kondensate(n)/Agglomerate(n)/ Komplexe(n) adsorbiert oder mit diesen komplexiert werden. Fernerhin war überraschend, dass Toxine und gesundheitsgefährdende Stoffe, die in pflanzlichen Pressrückständen oder Mahlprodukten enthalten sein können, wie beispielsweise die Erukasäure, Phorbolester oder synthetische Pflanzenschutzmittel, von Proteinen getrennt in der Verteilungslösung in gelöster Form vorliegen. Unter den erfindungsgemäßen Prozessbedingungen, die zur Aggregation der gelösten Verbindungen/Proteine verwandt werden, bleibt die Löslichkeit von gelösten Verbindungen, die nicht einem Protein oder einem wasserlöslichen Kohlenhydrat oder einem Phospholipid oder einem Glycoglycerolipid entsprechen, bestehen, sodass es, bei einer erfindungsgemäßen Auswahl des Aggregationsmittels, zu keiner Kondensation/Aggregation/ Komplexierung von Toxinen oder gesundheitsgefärdenden Stoffen, die im Folgenden auch als Gefahrstoffe bezeichnet werden, kam und es zu keinem Aus- bzw. Eintrag derartiger Verbindungen in die Kondensate/Aggregate/Komplexe der aggregierten wasserlöslichen Verbindungen/Proteinfraktion bzw. in die erhaltbaren Proteinfraktionen kam.

Bevorzugt ist ein Verfahren, bei dem die Löslichkeit von Toxinen und Gefahrenstoffen in einer wässrigen Proteinlösung, die im Anschluss an eine Ab-/Auftrennung der Konstituenten des pflanzlichen Ausgangsmaterials mittels einer wässrigen Lösung, enthaltend gelöste Aminosäuren und/oder Peptide, erhalten bleibt oder gesteigert wird.

In einer weiteren bevorzugten Ausführungsform erfolgt in einer weiteren Verfahrensstufe eine Kompaktierung der kondensierten/aggregierten/komplexierten wasserlöslichen Verbindungen/Proteine, indem ein Wasserentzug erfolgt. Besonders geeignet sind zentrifugale Verfahren, besonders geeignet ist die Verwendung eines Dekanters. Der Wasserentzug ermöglicht die Gewinnung einer kompakten Masse der wasserlöslichen Verbindungen bzw. den Erhalt einer Proteinmasse, die vorzugsweise fließfähig ist, weiter bevorzugt ist der Erhalt einer streichfähigen Masse und besonders bevorzugt ist der Erhalt einer formstabilen Masse kondensierter und kompaktierter löslicher Konstituenten des Ausgangsmaterials.

Überraschenderweise wurde gefunden, dass die mit der erfindungsgemäßen Verfahrenstechnik kondensierten Verbindungen und insbesondere kondensierte Proteine, Raumvolumina ausbilden, die es ermöglichen, eine Kompaktierung mittels filtrativer Techniken durchzuführen. Es konnte gezeigt werden, dass eine Kompaktierung kondensierter löslicher Proteine und/oder anderer kondensierter Konstituenten mittels einer Filtration erfolgen kann, bei der es zu keinem oder annähernd keinem Verlust an kondensierten wasserlöslichen Verbindungen/Proteinen kommt. Bevorzugt sind Bandfilter oder Kammerfilter, bzw. Filterpressen und Kammerfilterpressen, sowie Vakuum-Bandfilter. Überraschenderweise wurde gefunden, dass derartig gewonnene kompaktierte Proteine vollständig oder annähernd vollständig geruchs- und/oder geschmacks- neutral sind und bei einer Lösung in Wasser sich sehr rasch lösen und keine oder praktisch keine Farbstoffe in das wässrige Medium abgeben. Annähernd vollständig bedeutetet dabei > 98%.

Bevorzugt ist ein Verfahren zur Gewinnung kompaktierter Proteine, die im Anschluss an eine Ab-/Auftrennung der Konstituenten des pflanzlichen Ausgangsmaterials mittels einer wässrigen Lösung, enthaltend gelöste Aminosäuren und/oder Peptide, erhalten werden und die vollständig oder annähernd vollständig geruchs- und/oder geschmacks- neutral sind und bei einer Lösung in einem Wasser sich sehr rasch lösen und keine oder praktisch keine Farbstoffe in das wässrige Medium abgeben.

Daher ist ein Verfahren bevorzugt, bei dem bevorzugt >95 Gew%, mehr bevorzugt > 97 Gew% und weiter bevorzugt > 98,5Gew% der Proteine, die in einem pflanzliche Ausgangsmaterial vorliegen, separiert und kompaktiert werden.

Bevorzugt ist ein Verfahren, bei dem > 95 Gew% der in einem pflanzlichen proteinhaltiges Ausgangsmaterials enthaltenen Proteine, im Anschluss an eine Ab-/Auftrennung der Konstituenten des pflanzlichen Ausgangsmaterials mittels einer wässrigen Lösung, enthaltend gelöste Aminosäuren und/oder Peptide, in Form kompaktierter Proteine erhalten werden.

Bevorzugt werden die Proteinaggregate/-kondensate einem Trocknungsverfahren unterzogen. Bevorzugt sind eine Sprüh- und eine Gefriertrocknung. In vorteilhafter Weise können hierdurch gepulverte Proteingemische, Proteinkonzentrate oder Proteinisolate hergestellt werden. Aber auch andere Verfahren und Techniken zur Trocknung aus dem Stand der Technik können verwandt werden.

In Abhängigkeit vom eingesetzten Ausgangsmaterial und der Prozessführung, fallen insbesondere bei einer industriellen Großproduktion große Mengen der geklärten Prozesswasserphase des Prozessschritts 5) an. Da hierin noch relevante Mengen, mit z. T. über 100mmol/l der eingesetzten gelösten Aminosäuren und/oder Peptide vorliegen, ist eine Wiederverwendung der geklärten Prozesswasserphase für die Durchführung eines prozessökonomischen Verfahrens erforderlich. Es wurde gefunden, dass die hierin ebenfalls enthaltenen Aggregationsmittel, die nicht mit dem Produkt des Prozessschritts 5) ausgetragen wurden, die Wiederverwendbarkeit der geklärten Wasserphase des Prozessschritts 5) in den Prozessschritten des Hauptverfahrens erschweren bis unmöglich machen, da es hierdurch zu Aggregaten/Kondensaten, z.B. von Proteinen, in den Prozessschritten 2b) bzw. 2) kam, die dann in dem Prozessschritt 3) im Filterrückstand vorlagen und somit zu einem Produktverlust und einem höheren Reinigungsaufwand für die aus diesem Prozessschritt erhaltbaren Produkte kam. Überraschenderweise wurde gefunden, dass gerade die Verwendung der geklärten Prozesswasserphase dem Prozessschritt 5) in besonders vorteilhafter Weise zu einer Abreicherung von gelösten wasserlöslichen Proteinen, die sich noch in der gebundenen Wasserphase der im Filterrückstand des Prozessschritts 3) erhaltbaren cellulose-basierten Fasern und lignin-reichen Schalenanteilen befinden, vorgenommen werden kann. So konnte gezeigt werden, dass es durch eine Spülung und Reinigung der separierbaren soliden wasserunlöslichen Feststoffe des Prozessschritts 3) mit der geklärten Prozesswasserphase des Prozessschritts 5), zu einem überaus effektiven Austrag von gelösten organischen Verbindungen, die hierin noch vorliegen, kommt, wodurch diese organischen Verbindungen in das hiermit angereicherte Prozesswasser übergehen und nach einer Separation der soliden wasserunlöslichen bzw. ungelösten Feststoffe hierin verbleiben. Überraschenderweise war die Effektivität der Abreicherung gelöster Verbindungen, die sich noch im Filterrückstand des Verfahrenssschritts 3) befanden, mit der geklärten Prozesswasserphase des Verfahrenssschritts 5) deutlich höher, als wenn eine Spülung und Reinigung des Filterrückstandes mit einer Frischwasserphase erfolgte. Überraschenderwiese kam es hierdurch auch zu einer deutlichen Reduktion der Konzentration der in der geklärten Prozesswasserphase des Verfahrenssschritts 5) befindlichen Komplexierungsmitteln, deren Konzentration nach einer Spülung und Reinigung der soliden wasserunlöslichen bzw. ungelösten Feststoffe, die aus dem Prozessschritt 3) erhalten worden waren, deutlich geringer war als zuvor. Es wurde gefunden, dass die verbliebenen Konzentrationen an Aggregationsmitteln in der erhaltenen Prozesswasserphase nach Abtrennung der gereinigten soliden wasserunlösliche bzw. ungelösten Feststoffe, bei einer Einleitung in die Prozessschritte 2a), 2b), bzw. 2 der Hauptprozessführung, nicht zu einer Aggregation von wasserlöslichen organischen Verbindungen führt. Darüber hinaus wurde gefunden, dass die Konzentration der gelösten Aminosäuren und/oder Peptide, die zur Ab/Auftrennung der Konstituenten des Ausgangsmaterials eingesetzte wurden, in der Prozesswasserphase nach einer Spülung und Reinigung der Filterrückstände des Prozessschritts 3) in einem Nebenschlussprozessweg eine höhere Konzentration aufwiesen, als dies der Fall war in der geklärten Prozesswasserphase des Verfahrensschritts 5). Hierdurch lassen sich somit vorteilhafterweise eingesetzte Verbindungen zur Ab-/Auftrennung der Konstituenten des Ausgangsmaterials zurückgewinnen und gleichzeitig eine Prozesswasserphase herstellen, die geeignet ist für eine Anwendung zur Ab-/Auftrennung von Konstituenten des Ausgangsmaterials. Somit ist eine Kreislaufführung der Prozesswasserphase, die aus dem Verfahrensschritt 5) erhalten wird, über ein Nebenstromverfahrensweg zur Spülung und Reinigung von cellulose-basierten Fasern und/oder lignin-reichen Schalenanteilen eine besonders bevorzugte Verfahrensausführung, durch die eine hoch effiziente Wiederverwertung der eingesetzten Verbindungen zur Ab-/Auftrennung von Konstituenten des Ausgangsmaterials und der eingesetzten Kondensierungsmittel, bei optimaler Produktherstellung, erfolgt. Ferner lassen sich durch diese Verfahrensausführung erhebliche Prozesskosten im Nebenstromprozessverfahren, die für eine Spülung und Reinigung der cellulose-basierten Fasern und/oder lignin-reichen Schalenanteile anfallen, reduzieren. Somit kann ein prozessökonomisches Verfahren zur Separation von Konstituenten eines Ausgangsmaterials bereitgestellt werden, indem eine Kreislaufführung der Prozesswasserphasen zwischen einem Hauptprozessverfahren und einem Nebenstromprozessverfahren vorgenommen wird.

Bevorzugt ist ein Verfahren und eine Verfahrensführung zur prozessökonomischen Separation von Konstituenten eines pflanzlichen Ausgangsmaterials.

Sofern eines der erfindungsgemäßen Nebenstromprozessverfahren nicht oder nicht unmittelbar erfolgt, kann in einer weiteren bevorzugten Ausführungsform eine Aufreinigung der geklärten wässrigen Prozesswasserphase(n), die erhalten wird/werden nach der Separation der Kondensate/Aggregate/Komplexe des Prozessschritts 5) und/oder der separierten Wasserphase, die bei der Kompaktierung der kondensierten Kondensate/Aggregate/Komplexe in einer weiteren Nebenstromprozessverfahrensstufe erhalten wird, erfolgen.

Mit einer oder mehrerer dieser Verfahrensausführungen zur Aufreinigung von Prozesswasserphasen, die sequentiell oder parallel in einer beliebigen Abfolge durchgeführt werden können, wird eine aufgereinigte Prozesswasserphase erhalten, die gelöste Aminosäuren und/oder Peptide enthält, die zur Ab-/Auftrennung von Konstituenten eines pflanzlichen Ausgangsmaterials geeignet sind und bei der eine niedrige und bei einer Wiederverwendung der aufgereinigten Prozesswasserphase nicht störend wirkende Konzentration von Kondensierungsmitteln vorliegt, sowie eine ausreichende Reduktion oder Elimination von toxischen und gesundheitsschädlichen Verbindungen erreicht worden ist.

In einer bevorzugten Ausführungsart, wird die Prozesswasserphase, die aus der Spülung und Reinigung von Filterrückständen des Verfahrenssschritts 3 in einem Nebenstromprozessverfahren oder anderen Verfahren von Nebenstromprozessen erhalten werden, einer der erfindungsgemäßen Aufreinigungsverfahrensschritte unterzogen.

Somit lässt sich durch eine prozessadaptive Auswahl einer oder mehrerer der jeweils optional durchführbaren Verfahrensschritte des Prozessschritts 6) in überaus vorteilhafter Weise der Prozesswasserphasenstrom so gestalten, dass eine optimale Wertschöpfung des Verfahrens gewährleistet und eine Wiedereinsetzbarkeit der Prozesswasserphasen garantiert werden kann. Die einzelnen optionalen Verfahrensausführungen können in die folgenden optionalen Verfahrensprozessunterstufen zusammengefasst werden:
6.1) Bereitstellung eines Prozesswassers für ein Nebenstromverfahren
6.2) Rückführung und Bereitstellung der gebrauchten Prozesswasserphase aus dem Nebenstromverfahren der Schritt 6.1)
6.3) Reinigung der Prozesswasserphase, erhältlich aus den Verfahrenssschritten 5) und/oder 6.2) und/oder einem Nebenstromprozessverfahren
6.4) Bereitstellung einer geklärten und gereinigten Prozesswasserphase,

Hieraus ergeben sich verschiedene Kombinationsmöglichkeiten bei der Ausführung des Verfahrenssschritts 6), die durch die Anzahl und Reihenfolge der optionalen Verfahrensschritte gekennzeichnet sind, wie beispielsweise: 6.1 dann 6.2 dann 6.3 dann 6.4 oder 6.3 dann 6.4 oder 6.3 dann 6.1 dann 6.2 dann 6.4 oder 6.2 dann 6.3 dann 6.1.

Daher ist es besonders vorteilhaft, die geklärte und gereinigte Prozesswasserphase einem der Verfahrensschritte zur Ab-/Auftrennung von Konstituenten pflanzlicher Ausgangsmaterialien bei einer subsequenten Prozessdurchführung zuzuführen. Damit ist die mit diesem Prozessschritt erhaltbare Prozesswasserphase geeignet zur Wiederverwendung als Prozesswasserphase.

Bevorzugt ist ein Verfahren zur Separation von Konstituenten pflanzlicher Ausgangsmaterialien, bei dem eine Ab-/Auftrennung der Konstituenten des pflanzlichen Ausgangsmaterials mittels einer wässrigen Lösung, enthaltend gelöste Aminosäuren und/oder Peptide, erfolgt und im Anschluss an eine Verteilung der Konstituenten in einem wässrigen Verteilungsvolumen und nachfolgender Abtrennung solider und kondensierter löslicher Konstituenten eine geklärte Prozesswasserphase erhalten wird, die aufgereinigt wird und anschließend für einem der Verfahrensschritte wieder einsetzbar ist.

Bevorzugt ist ein Verfahren zur Separation von Konstituenten pflanzlicher Ausgangsmaterialien, bei dem eine Ab-/Auftrennung der Konstituenten des pflanzlichen Ausgangsmaterials mittels einer wässrigen Lösung, enthaltend gelöste Aminosäuren und/oder Peptide, erfolgt und im Anschluss an eine Verteilung der Konstituenten in einem wässrigen Verteilungsvolumen und nachfolgender Abtrennung solider und kondensierter löslicher Konstituenten eine geklärte Prozesswasserphase erhalten wird, die in einem Nebenstromprozessverfahren zur Spülung/Reinigung eingesetzt und anschließend aufgereinigt und dann in einer der Hauptprozessverfahrensstufen wieder einsetzt wird.

In einer bevorzugten Ausführungsform erfolgt eine Wiederverwendung einer geklärten und/oder geklärten und gereinigten Prozesswasserphase, erhaltbar aus dem Verfahrenssschritt 6). Es konnte gezeigt werden, dass insbesondere bei der Verwendung der Prozesswasserphase des Verfahrensschritt 6.4) die Einsatzmenge von Aminosäuren und/oder Peptiden, zum Zwecke der Ab-/Auftrennung von Konstituenten des Ausgangsmaterials reduziert werden kann, gegenüber der Verwendung einer Frischwasserphase in den Prozessschritten 2a) und/oder 2b), bzw. 2). So konnte eine sehr gute Lösung der wasserlöslichen Konstituenten des Ausgangsmaterials durch die erfindungsgemäßen Aminosäuren und/oder Peptide, die sowohl in einer geklärten als auch in einer geklärten und gereinigten Prozesswasserphase des Prozessschritts 6) vorlagen, festgestellt werden. Ferner kommt es zu einem identischen Verteilungsergebnis bei Verwendung der Prozesswasserphase des Prozessschritts 6.2), wie bei Verwendung einer gleicher Volumenmenge einer Frischwasserphase für eine Verteilung der ab-/aufgetrennten Konstituenten des Ausgangsmaterials in dem Prozessschritt 2b) bzw. 2). Es konnte ferner gezeigt werden, dass es zu einer größeren Menge (Trockenmasse) an erhaltbaren kondensierten/aggregierten/komplexierten wasserlöslichen Konstituenten kommt, als wenn für die gleiche Prozessdurchführung Frischwasser verwandt worden war.

Bevorzugt ist ein Verfahren zur Separation von organischen Konstituenten pflanzlicher Ausgangsmaterialien, bei dem eine geklärte und/oder geklärte und gereinigte Prozesswasserphase der Haupt- und/oder Nebenstromprozessschritte zur erneuten Prozessdurchführung eingesetzt wird.

Das bevorzugte Verfahren ist somit durch folgende Verfahrensschritte charakterisiert:
1) Bereitstellen von Ausgangsmaterialien,
2a) Versetzen des Ausgangsmaterials der Schritt 1) mit einer wässrigen Lösung, enthaltend gelöste Aminosäuren und/oder Peptide zur Ab-/Auftrennung der Konstituenten des Ausgangsmaterials,
2b) Bereitstellung eines wässrigen Verteilungsvolumen und Verteilung der ab-/aufgetrennten Konstituenten des Gemisches aus der Schritt 2a),
3) Separation solider wasserunlöslicher/ungelöster Feststoffe aus dem Verteilungsgemisch des Schritts 2b) unter Erhalt einer faser-freien wässrigen Lösung gelöster Konstituenten des Ausgangsmaterials,
4) Kondensierung/Aggregation/Komplexierung der gelösten löslichen Konstituenten der wässrigen Lösung des Schritts 3) unter Erhalt einer wässrigen Phase, enthaltend aggregierte lösliche Konstituenten des Ausgangsmaterials,
5) Separation und Kompaktierung der aggregierten wasserlöslichen gelösten Konstituenten des Ausgangsmaterials des Schritts 4) und Erhalt eines kompaktierten Kondensates aus Schritt 4) sowie einer geklärten Prozesswasserphase,
6) Verwendung der geklärten Prozesswasserphase des Schritts 5) für einen oder mehrere der optionalen Prozessschritte:
   6.1) Bereitstellung einer Prozesswasserphase für ein Nebenstromverfahren;
   6.2) Rückführung der Prozesswasserphase des Schritts 6.1) erhältlich aus einem Nebenstromverfahren und Bereitstellung der gebrauchten Prozesswasserphase aus einem Nebenstromverfahren
   6.3) Reinigung der Prozesswasserphase erhältlich aus Verfahrensschritt 5) und/oder 6.2
   6.4) Bereitstellung einer geklärte und gereinigte Prozesswasserphase,
7) Wiederverwendung geklärter und/oder geklärter und gereinigten Prozesswasserphase
wobei die geklärte und/oder geklärte und gereinigte Prozesswasserphase des Schritts 7) aus einem oder mehreren Prozessen des Schritts 6) erhalten werden und die Wiederverwendung in den Schritten 2a) und/oder 2b) oder einem Nebenstromprozessverfahren erfolgt.

In einer weiteren Verfahrensvariante werden die Verfahrensschritte 2a) und 2b) in einem Prozessschritt, dem Verfahrensschritt 2, durchgeführt. Hierzu wird das pflanzliche Ausgangsmaterial des Prozessschritts 1) unmittelbar mit einem Lösungsvolumen in Kontakt gebracht, das zum einen eine ausreichende Konzentration an gelösten Aminosäuren und/oder Peptiden enthält, um die erfindungsgemäße Ab-/Auftrennung der Konstituenten des pflanzlichen Ausgangsmaterials zu gewährleisten und zum anderen ein ausreichend großes Wasserverteilungsvolumen aufweist, mit dem eine erfindungsgemäße Verteilung der Konstituenten des Ausgangsmaterials ermöglicht wird.

In einer Verfahrensausführung werden die gelösten Verbindungen bzw. Verbindungsklassen, die in der faser-freien wässrigen Lösung des Prozessschrittes 4 vorliegen, differentiell mit den gelösten Proteinen und/oder anderen gelösten Verbindungen aggregiert/komplexiert. Dies kann erfolgen, indem in dem Verfahrensschritt 4b) vor, während oder nach der Initiierung der Kondensation/Aggregation/Komplexierung der Proteine und/oder anderen gelösten Verbindungen, eine oder mehrere Verbindungen der faser-freien Proteinlösung hinzugegeben werden, die die Löslichkeit von Verbindungen, die beispielsweise nicht Proteine sind, erniedrigen. Dies kann beispielsweise erfolgen, in dem Carbonate hinzugegeben werden, um die Löslichkeit von Glycolipiden zu verändern oder durch eine Hinzugabe von Chelatbildern, um die Löslichkeit von Phospholipiden zu verändern. Aber auch andere Verbindungen können verwandt werden, wie Alkohole, NaSO₄, Ammoniumsulfat, CaCl₂, MgCl₂, Acetate, Tartrate oder Silikate. Hierdurch wird erreicht, dass die Löslichkeit einzelner oder mehrerer gelöster Verbindungen erniedrigt wird, wodurch diese an/mit den Proteinen adhärieren/komplexieren. Dies erfolgt vorzugsweise während der Kondensation/Aggregation/Komplexierung der Proteine in diesem Verfahrensschritt. Hierdurch werden die Verbindungen, deren Löslichkeit in dem Reaktionsgemisch erniedrigt wird, in die sich ausbildenden Protein-Kondensate/-Aggregate/-Komplexe aufgenommen und in dieser Form gewinnbar gemacht. Dieser Prozess erfolgt vorzugsweise in einem neutralen pH-Bereich, bevorzugt ist ein pH zwischen 6 und 8.

Bevorzugt ist ein Verfahren, bei dem in dem Verfahrensschritt 4a) eine oder mehrere Verbindung(en) der wässrigen Prozesslösung hinzugegeben wird/werden, um sie an gelöste und/oder sich kondensierende/aggregierende/komplexierende und/oder kondensierte/aggregierte/komplexierte Proteine zu binden und/oder hierin aufzunehmen, durch Hinzugabe der einen oder mehrerer Verbindung(en) vor, während oder nach der Initiierung der Kondensation/Aggregation/Komplexierung der Proteine.

Bevorzugt ist ein Verfahren, bei dem in dem Verfahrensschritt 4b) Verbindungen, die in der wässrigen Prozesslösung gelöst vorliegen, an die gelösten Proteine binden oder mit diesen kondensieren/ aggregieren/komplexieren durch Hinzugabe dieser Verbindungen vor, während oder nach der Initiierung der Kondensation/Aggregation/Komplexierung der Proteine.

Bevorzugt ist ein Verfahren, bei dem in Schritt 4b) Verbindungen, die in der wässrigen Prozesslösung gelöst vorliegen, an die gelösten Proteine gebunden werden, indem diese Verbindungen mit den gelösten Proteinen kondensiert/aggregiert/komplexiert werden.

### Nebenstrom-Prozessverfahren 3-1

Die erfindungsgemäßen Verfahrensschritte des optionalen Nebenstrom-Prozessverfahrens ermöglichen in besonders vorteilhafter und überraschender Weise weitere überaus vorteilhafte Effekte bei der stofflichen Verwertung der in dem Verfahrensschritt 3) erhaltbaren Siebrückstände. Die Zusammensetzung der korpuskulären organischen Bestandteile des Siebrückstandes ist dabei abhängig von dem Ausgangsmaterial. Prinzipiell können die folgenden Hauptkomponenten gefunden werden: cellulose-basierte Fasern, lignin-basierte Schalenanteile, komplexe Kohlenhydrate, wobei die komplexen Kohlenhydrate überwiegend in Form von korpuskulären soliden Anteilen bis hin zu vollständig erhaltenen Stärkekörnern vorliegen. Bei den optionalen Verfahrensschritten des Nebenstrom-Prozessverfahrens 3-1 wird der in Verfahrensschritt 3) erhaltene Siebrückstand oder Filterkuchen (ggf. vorfraktioniert durch die Verfahrensschritte 3a) oder 3b)) verwandt. Das Material wird im Verfahrensschritt 3-1.a mit einer Wasserphase in einem Reaktionsgefäß (R3 gemäß Schema 1) gemischt. Vorzugsweise handelt es sich hierbei um eine geklärte Prozesswasserphase, die z. B. im Anschluss an Verfahrensschritt 5) erhältlich wird und aus dem Vorratstank V5a dem Prozessschritt zugeleitet wird. Es kann aber auch jede andere Wasserphase sowie Frischwasser verwandt werden. Das Zugabeverhältnis der Wassermenge im Verhältnis zum Filterrückstand hängt von den noch vorhandenen Verunreinigungen ab, vorzugsweise beiträgt dieses zwischen (m:m) 1:1 und 500:1 Gew%, mehr bevorzugt zwischen 2:1 und 200:1 Gew% und weiter bevorzugt zwischen 3:1 und 100:1 Gew%. Vorzugsweise erfolgt eine Intensivmischung, beispielsweise mit einem Hochleistungsschermischer oder einer Kolloidmühle.

Bevorzugt ist ein Verfahren, bei dem cellulose-basierte Faserstoffe, lignin-reiche Schalenteile und/oder solide komplexe/komplexierte Kohlenhydrate von pflanzlichen Ausgangsmaterialien in reiner Form separiert und verwendet werden können.

Bevorzugt sind reine Fraktionen von cellulose-basierten Faserstoffen, lignin-reichen Schalenteilen und/oder solide komplexen/komplexierten Kohlenhydraten, erhältlich in reiner Form nach einem der erfindungsgemäßen Verfahren.

Rein bedeutet dabei, dass andere organischer Bestandteile/Verbindungen in einem Gewichtsanteil von < 10 % vorliegen.

### Desintegration pflanzlichen Ausgangsmaterials und erhaltbare Produkte

Das erfindungsgemäße Verfahren ist auch gerichtet auf eine vollständige stoffliche Verwertung aller Konstituenten des pflanzlichen Ausgangsmaterials. Es konnte überraschenderweise gezeigt werden, dass mit den erfindungsgemäßen Verfahrensschritten auch eine Desintegration des pflanzlichen Ausgangsmaterials ermöglicht wird und hierdurch auf aufwendige mechanische Aufschlussverfahren verzichtet werden kann. So konnte gezeigt werden, dass es nicht erforderlich ist, das pflanzliche Ausgangsmaterial möglichst fein mechanisch aufzuschließen, um mit dem erfindungsgemäßen Verfahren eine hohe Effizienz der stofflichen Auftrennung zu gewährleisten. Ferner wurde festgestellt, dass auch große Aggregate, die auch im Zentimetermaßstab skaliert sein können, von den erfindungsgemäßen wässrigen Lösungen mit der Zeit vollständig durchdrungen werden, was nicht der Fall ist mit wässrigen Lösungen, die Laugen, Säuren oder Tenside enthalten. Voraussetzung ist allerdings, dass eine Wasserdurchlässigkeit des aufzuschließenden pflanzlichen Ausgangsmaterials besteht. Daher wird in einer bevorzugten Ausführungsform zunächst ein Aufschluss des pflanzlichen Hüllmaterials, das eine wasserabweisende und/oder wasserundurchlässige Schicht oder Schichten ausbildet, durchgeführt, sodass das pflanzliche Ausgangsmaterial von den erfindungsgemäßen wässrigen Lösungen bei Raumtemperatur durchdrungen werden kann.

Ein anderer Aspekt der Erfindung betrifft Geruchs-und Geschmacksstoffe, die insbesondere in Pflanzensaaten enthalten sind und überwiegend an die hierin enthaltenen Proteine gebunden sind. Diese Verbindungen, wie z. B. Ketone oder Aldehyde, lassen sich nur schwer mit Techniken aus dem Stand der Technik abtrennen. Ein wässriges Verfahren, mit dem Aromastoffe oder Farbstoffe von Proteinen abgelöst und separiert werden können, ist nicht bekannt. Überraschenderweise wurde nun gefunden, dass es durch die Ab-/Auftrennung der Konstituenten der pflanzlichen Ausgangsmaterialien, mit den wässrigen Lösungen enthaltend gelöste Aminosäuren und/oder Peptide, ermöglicht wird, auch die Geruchs- und Geschmacksstoffe von ihren Bindungen abgelöst und in die wässrige Verteilungslösung ausgespült werden. Im Ergebnis sind die gewinnbaren Proteinfraktionen vollständig oder nahezu vollständig geruchs- und geschmacksfrei.

Bevorzugt ist ein Verfahren, bei dem Geruchs-und/oder Geschmacksstoffe und/oder antinutritive Verbindungen und/oder endogene oder exogene Toxinen von den Konstituenten abgelöst und separiert werden.

Es hat sich gezeigt, dass nicht nur Geruchs- oder Geschmacksstoffe von den Konstituenten der pflanzlichen Ausgangsmaterialien gelöst und separiert werden können, sondern auch andere physiologisch oder unphysiologisch vorkommende Verbindungen. Physiologische Verbindungen umfassen u. a. Phytosterole, Glycoside, Alkaloide, Inosite, Polyphenole, Flavinoid, Vitamine, Phytosterine, Saponine, Glucoinolate, Phytoöstrogene, Monoterpene sowie endogene Toxine, wie Phorbolester oder bestimmte Fettsäuren, wie die Erukasäure oder Phytinsäure. Unphysiologische Verbindungen umfassen u. a. Pestizide, Herbizide, Fungizide oder exogene Toxine z.B. von Pilzen, wie Aflatoxine, Ochratoxine, Alternaria-Toxine, Alternariolmonomethylether (AME), Altenuen und Tenuazonsäure, Fumonisine, Fusarium-Toxine oder Mutterkornalkaloide. In einer bevorzugten Ausführungsform werden Proteinfraktionen erhalten, die toxin- und gefahrstoffarm sind und die gegenüber dem Ausgangsmaterial < 30%, mehr bevorzugt < 15% und weiter bevorzugt < 5% der Toxine oder Gefahrenstoffe enthalten.

Bevorzugt ist ein Verfahren zur Ablösung und Separation von Geruchs-und/oder Geschmacksstoffen und/oder antinutritiven Verbindungen und/oder endogenen oder exogenen Toxinen.

Bevorzugt ist eine fehlaromenarme Proteinfraktion mit keinen oder minimalen Restgehalten an antinutritiven Verbindungen und/oder Toxinen.

Damit zielt das Verfahren auch auf die Gewinnung einer Proteinfraktion ab, die geruchs- und geschmacksstoffarm ist. Geruchs- und geschmacksstoffarm bedeutet in diesem Zusammenhang, dass gegenüber dem Ausgangsmaterial, vorzugsweise > 70%, mehr bevorzugt > 85% und weiter bevorzugt > 95% der Geruchs- und Geschmacksstoffe, die sensorisch wahrgenommen werden können, reduziert sind. Anders ausgedrückt wird eine Proteinfraktion durch eines der erfindungsgemäßen Verfahren erhältlich, das gegenüber dem Ausgangsmaterial < 30%, mehr bevorzugt < 15% und weiter bevorzugt < 5% an sensorisch wahrnehmbaren Geruchs- oder Geschmacksstoffen enthält. Ferner zielt das Verfahren auch auf die Gewinnung einer Proteinfraktion ab, die frei von Fehlaromen ist.

Bevorzugt ist ein Verfahren zur Herstellung von Proteinfraktionen, die frei von Fehlaromen sind. Bevorzugt ist ein Verfahren zum Erhalt einer geruchs- und geschmackstoff-arme Proteinfraktion. Bevorzugt ist eine geruchs- und geschmackstoff-arme Proteinfraktion.

Durch die Prozessverfahren und eine Auswahl geeigneter Prozessparameter lassen sich sehr reine Fraktion erhalten. Rein bedeutet dabei, dass die Proteinfraktionen einen Proteingehalt von vorzugsweise > 60 Gew%, mehr bevorzugt > 70 Gew%, weiter bevorzugt > 80 Gew% und noch weiter bevorzugt von > 85 Gew% und am meisten bevorzugt von > 90 Gew% aufweisen. Somit können mit den Verfahrensschritten und -Techniken hochreine Proteinfraktionen erhalten werden, die den Produktspezifikationen von Proteinkondensaten, Proteinkonzentraten und Proteinisolaten entsprechen.

Bevorzugt ist ein Verfahren zur Herstellung von Proteinkondensaten und/oder Proteinkonzentraten und/oder Proteinisolaten aus organischem Ausgangsmaterial mittels wässriger Lösungen, enthaltend gelöste Aminosäuren und/oder Peptide.

Für die Gewinnung von Mehlen werden die Schalen zumeist vor der Vermahlung separiert, da diese in den erhaltbaren Produkten zumeist nicht erwünscht sind. Dies gelingt in aller Regel nur mit einem großen prozesstechnischen Aufwand und unter Verlust von Korn-/Samenmaterial infolge mechanischer Zer-/Abteilungen. Faserstoffe, die in Samen, Kernen und Körnern, aber auch in anderen pflanzlichen Ausgangsmaterialien als Strukturbestandteile vorhanden sind, lassen sich mit Verfahren aus dem Stand der Technik nicht rückstandsfrei separieren oder isolieren, da sie mit den Inhaltsstoffen vollständig/vollflächig verbunden sind. Insbesondere eine mechanische Abtrennung dieser Faserstoffe ist nach dem Stand der Technik nicht möglich.

Es war deshalb völlig überraschend, dass sowohl die lignin-reichen Schalenanteile, als auch die cellulose-basierten Fasern der pflanzlichen Ausgangsmaterialien separiert und in einer unmittelbar reinen Form erhalten werden können. So konnten nach weitgehender Entfernung gebundener Wasseranteile keine oder nahezu keine Proteine, wasserlöslichen Kohlenhydrate, Geruchs- oder Geschmacksstoffe oder andere organische oder anorganische ablösbaren Verbindungen gefunden werden. Mikroskopisch waren keine Anhaftungen anderer löslicher organischer Bestandteile erkennbar. Die lignin-reichen Schalenteile weisen einen Ligningehalt von 50 - 95Gew% auf. Sie liegen als submillimeter-große Plättchen oder in amorpher Gestalt vor. Nach Trocknung liegen sie in riesel- und schütt-fähiger Form vor. Es besteht eine erhebliche Wasserretensionskapazität die > 40% betragen kann. Die cellulose-basierten Fasern haben mikroskopisch eine watteartige 3-dimenstionale Raumstruktur mit mittleren Durchmessern zwischen 50 und 500µm bei einem Aspektverhältnis (Länge/Durchmesser) von 1:1 bis 100:1. Es handelt sich um vereinzelte/diskrete Strukturen, die nicht zusammenhängen und ein sehr geringes Längengewicht von < 70mg/m aufweisen. Ferner wurde gefunden, dass sowohl die gewinnbaren cellulose-basierten Fasern, als auch die lignin-reichen Schalenanteile eine erhebliche Wasserbindungskapazität aufwiesen, die mehr als 200 vol% betrugen. Bevorzugt ist ein Verfahren, bei dem reine lignin-basierte Schalenteile und/oder cellulose-basierte Fasern aus einem pflanzlichen Ausgangsmaterial erhalten werden, mit einer Wasserbindungskapazität von > 200vol%.

Überraschenderweise weisen getrocknete lignin-basierte Schalenteile neben einer hohen Wasserbindungskapazität und hohem Wasserrückhaltevermögen auch eine extrem große

Bindungskapazität für Öle und Fette auf. Diese betrug in Versuchen zu verschiedenen lignin-basierten Schalenteilen zwischen 250 und 550Gew%. Ferner konnte gezeigt werden, dass die getrockneten und gepulverten cellulose-basierten Fasern ebenfalls eine sehr große Bindungskapazität für Öle und Fette aufwies, die zwischen 220 und 360 Gew% betrug.

Bevorzugt ist ein Verfahren, bei dem reine lignin-basierte Schalenteile und/oder cellulose-basierte Fasern aus einem pflanzlichen Ausgangsmaterial erhalten werden, mit einer Öl-und/oder Fettbindungskapazität von > 200 Gew%.

Es wurde gefunden, dass die hergestellten cellulose-basierten Fasern sich in der chemischen Zusammensetzung im Vergleich zu Cellulosefasern sowie Cellulosederivaten unterscheiden. Während in Cellulosefasern und Cellulosederivate neben C, H und O praktisch keine weiteren Elemente bestimmt werden konnten, waren in cellulose-basierten Fasern zahlreiche Elemente wie N, S, P, Fe, Cl, Na, Ca, K, Ni, Cl, Cu, sowie weitere Elemente vorhanden. Aufgrund der Bindungseigenschaften, die für die cellulose-basierten Fasern gefunden wurden, ist anzunehmen, dass diese Elemente zumindest in Teilen funktionellen Gruppen zugehörig sind, die kovalent entweder direkt oder indirekt mit dem polymeren Gerüststrukturen verbunden sind. Eine kovalente indirekte Verbindung kann dabei vorliegen, z. B. über einen Zuckerrest oder ein Peptid. Es ist aber auch denkbar, dass nicht kovalent gebundene Verbindungen mit dem polymeren Grundgerüst über elektrostatische Wechselkräfte verbunden sind, die dies funktionellen Gruppen bzw. Elemente aufweisen.

### Erhaltbare Produkte

Überraschenderweise wurden mit den erfindungsgemäßen Verfahrensarten Proteinfraktionen erhalten, die keine Fehlaromen enthielten. Fehlaromen bedeuten dabei, Geruchs- und Geschmacksstoffe, die zu einer qualitativen Minderung des Produktes führen. Weiterhin vorteilhaft ist, dass die erhaltbaren Proteinfraktionen praktisch oder vollständig frei waren von jeglichen Geschmacks und Geruchsstoffen und somit ein geschmacks- und geruchs-neutrales Proteinprodukt erhalten wurde.

Bevorzugt ist ein Verfahren, bei dem eine Proteinfraktion erhalten wird, die frei ist von Fehlaromen und/oder praktisch geruchs- und geschmacks-neutral ist.

Ein überaus vorteilhafter Aspekt dieser Erfindung besteht in der Möglichkeit, die gewinnbaren Proteinfraktionen mit anderen Verbindungen/Stoffgruppen anzureichern, wodurch qualitativ höherwertige Produkte entstehen. Eine höhere Produktqualität bezieht sich dabei beispielsweise auf einen hiermit erzielbaren höheren nutritiven Wert gegenüber einer reinen Proteinfraktion. Dies ist beispielsweise der Fall, wenn eine Kombination aus Proteinen und wasserlöslichen Kohlenhydraten vorliegt. Weitere Möglichkeiten für einen höheren nutritiven Wert eines Kombinationsproduktes bestehen bei Einschluss von Vitaminen oder Antioxidantien, die bevorzugt aus dem verwandten Ausgangsmaterial selbst entstammen, aber auch vor einer Kondensation/Aggregation/ Komplexierung der Lösung mit gelösten Proteinen hinzugegeben werden können. Qualitativ höherwertig bezieht sich u.a. aber auch auf die erzielbaren Produkteigenschaften. So lassen sich beispielsweise mit einer der erfindungsgemäßen Ausführungsformen Phospholipide und/oder Glycolipide im Rahmen einer Kondensation/Aggregation/Komplexierung der gelösten Proteine an/mit diese(n) adhärieren oder aggregieren, sodass ein sehr homogenes Produkt aus Proteinen und Phospholipiden und/oder Glycolipiden entsteht. Ein derartiges Produkt zeichnet sich durch eine sehr gute Proteinlöslichkeit sowie ausgezeichnete Grenzflächeneigenschaften aus, wodurch sich eine verbesserter Qualität, z.B. Lebensmittelschäume und -emulsionen herstellen und stabilisieren lassen. Bevorzugt ist eine Proteinfraktion, bei der der Proteinlöslichkeitsindex (PDI) bei > 80 % liegt. Ferner bevorzugt ist eine Proteinfraktion, die eine hohe Schaumstabilität ermöglicht.

Überraschenderweise konnten cellulose-basierte Fasern erhalten werden, die in reiner und vereinzelter Form im Submillimeterbereich zur unmittelbaren Verwertung vorliegen. Durch die dreidimensionale Raumstruktur der Fasern besteht eine sehr große Oberfläche mit bemerkenswerten Bindungseigenschaften. Neben der enormen Wasserbindungskapazität werden auch oleophile Verbindungen adsorbiert. Es konnte in Backversuchen eine hervorragende Stabilisierung von Teigen durch den Zusatz von cellulose-basierten Fasern, aber auch im Falle eines Ersatzes mit einem Mehl durch diese, dokumentiert werden. Dabei quellen die cellulose-basierten Fasern aufgrund der großen Oberfläche sehr schnell und bewirken dann beim Verzehr ein sehr angenehmes Mundgefühl.

Ferner konnte eine Stabilisierung der Konsistenz bei der Käseherstellung beobachtet werden. Insofern ist eine Verwendung auch als Fettersatzstoff möglich. Ferner konnte gezeigt werden, dass sich cellulose-basierte Fasern hervorragend als Ballaststoff-Zusatz in Nahrungszubereitungen formulieren lassen. Ferner kam es bei Personen, die eine ballaststoff-reiche Kostform, die mit den erfindungsgemäß gewonnenen und hergestellten cellulose-basierten Fasern zubereitet worden waren, zu einer Gewichtsreduktion kam.

Bevorzugt ist die Verwendung von cellulose-basierten Fasern als niederkalorischer Ballaststoff für die humane oder tierische Ernährung.

Bevorzugt ist die Verwendung von cellulose-basierten Fasern als Ersatzstoff für Fette und/oder Bindemittel für die Nahrungsmittelzubereitung.

In ganz besonders vorteilhafter Weise ermöglichen die erfindungsgemäßen Verfahrensarten eine Rückgewinnung, Aufreinigung und den Wiedereinsatz der eingesetzten Flüssigkeiten sowie nicht verbrauchter oder mit dem/den erhaltenen Produkte(n) ausgetragene(n) Verbindungen. Hierdurch können Abwasserströme und eine Belastung der Umwelt mit organischem Material vollständig vermieden werden. Die Rückführung kann dabei an verschiedenen Stellen im Verfahrensprozess, sowohl, vor als auch nach vorheriger Abreicherung von gelösten Stoffen und z. T. in unveränderter Weise erfolgen mit einem synergistischen Nutzen in der jeweiligen Verfahrensschritt. Die Wiederverwendung ist ferner besonders ressourcensparend, da in Prozesslösungen, die nach einem Separationsvorgang erhalten werden, noch eingesetzte Verbindungen und/oder gelöste Produkte vorliegen und bei einer neuerlichen Verwendung dieser Prozesswasserphase die Verbindungen/Produkte dem Prozess an gleicher oder anderer Stelle zurückgeführt und damit wieder verwendungsgemäß eingesetzt bzw. als Produkt gewonnen werden können. Dies trifft insbesondere für einen Wiedereinsatz der geklärten Prozesswasserphase nach des Verfahrensschritts 5) zu, die nach der Abtrennung der Kondensate/Agglomerate/Komplexe erhalten wird. In dieser Lösung liegen die gelösten Aminosäuren und/oder Peptide, je nach Prozessführung, noch in einer Konzentration /Menge vor, die eine Lösung von wasserlöslichen Konstituenten des Ausgangsmaterials ab-/auftrennt, wie in Untersuchungen, die mit dieser Prozesswasserphase ohne eine weitere Aufreinigung bei einem erneuten Einsatz an einem identischen proteinhaltiges biogenes Ausgangsmaterials durchgeführt wurden, gefunden wurde. Überraschenderweise wurde gefunden, dass die geklärte Prozesswasserphase der Verfahrensstufe 5) sehr gut eignet ist, um eine vollständige Abreicherung von gelösten Verbindungen, die sich in dem gebundenen Wasseranteil der cellulose-basierten Fasern und lignin-reichen Schalenanteilen befinden, zu erreichen, wenn diese mit der geklärten Prozesswasserphase des Schritts 5) durchspült werden, wodurch die wasserlöslichen Bestandteile vollständig oder nahezu vollständig mit der Wasserphase, die bei einem Wasserentzug der gespülten cellulose-basierten Fasern und lignin-reichen Schalenanteilen anfällt, separiert werden. Es konnte gezeigt werden, dass durch die Verwendung der geklärten Prozesswasserphase des Verfahrensschritts 5) sowie des geklärten und gereinigten Prozesswassers des Verfahrensschritts 6.3) zur Spülung der cellulose-basierten Fasern und/oder lignin-reichen Schalenanteile in dem Nebenstromverfahrensschritt 3-I), gelöste Aminosäuren und/oder Peptide, die in dem gebundenen Wasseranteil der cellulose-basierten Fasern und lignin-reichen Schalenanteilen durch den Spülprozess in die Prozesswasserphase ausgespült werden und hierdurch in die erhaltbare Prozesswasserphase gelangen, die nach der Entwässerung der cellulose-basierten Fasern und/oder lignin-reichen Schalenanteilen erhalten wird, in einer deutlich höheren Konzentration vorlagen, als dies in der eingangs eingesetzten geklärten und/oder geklärten und gereinigten Prozesswasserphase der Fall war. Ferner waren geringe Mengen an aggregierten Proteinen in der erhaltenen Prozesswasserphase enthalten und der Gehalt an Aggregationsmitteln war nicht oder nur in minimaler Konzentration messbar. Vorzugsweise wird diese aggregationsmittel-arme und Aminosäure/Peptid-reiche sowie proteinhaltige Prozessflüssigkeit in einer subsequenten Verfahrensdurchführung in den Verfahrensschritten 2a) und/oder 2b) bzw. 2) als Wasserphase eingesetzt. Durch diese Verfahrensführung kann ein Verlust an erhaltbaren Produkten und insbesondere der Konstituenten des Ausgangsmaterials sowie der zur Prozessdurchführung eingesetzten gelösten Aminosäuren und/oder Peptide sowie der Aggregationsmittel auf ein Minimum reduziert und Abwasserströme, die mit organischen Bestandteilen belastet sind, vermieden werden.

Bevorzugt ist ein Verfahren, bei dem die Prozessflüssigkeiten recycelt und zur Prozessdurchführung wieder eingesetzt werden.

Somit können mit dem erfindungsgemäßen Verfahren in überaus vorteilhafter Weise sowohl ein vollständiger Aufschluss von pflanzlichen Ausgangsprodukten in die Hauptkonstituenten erfolgen, als auch reine Fraktionen dieser Konstituenten erhalten werden, mit verbesserten Produkteigenschaften gegenüber Produkten aus dem Stand der Technik. Die erfindungsgemäßen Verfahrensschritte ermöglichen die Gewinnung von reinen Phasen der Inhaltsstoffe, wie von Proteinen, Kohlenhydraten, Faserstoffen und Schalenanteilen, in einem nieder-energetischen Kreislaufverfahren, bei dem die zur Produktherstellung eingesetzten Verbindungen nahezu vollständig aus den verschiedenen Prozessschritten zurückgewonnen und sowohl im Verlauf der gleichen Verfahrensdurchführung als auch bei einer erneuten Anwendung wieder verwandt werden. Dies gilt auch für die eingesetzten Prozesswasserphasen.

### Definitionen:

### Pflanzliche proteinhaltige Ausgangsmaterialien

Unter dem Begriff "Ausgangsmaterialien", wie hierin verwendet, werden alle biogenen Produkte, die eine oder mehrere der Hauptkonstituenten: Proteine, Kohlenhydrate, Faserstoffe/Schalen oder Fette/Öle enthalten, zusammengefasst. Prinzipiell können die Ausgangsmaterialien einen beliebigen Anteil der Hauptkonstituenten sowie andere Bestandteile und Verbindungen aufweisen. Die bevorzugten Ausgangsmaterialien sind pflanzlichen Ausgangsmaterialien, wie beispielsweise Samen, Körner, Kerne, Nüsse, Bohnen, Rübengewächse, Knollengewächse, Gemüse, Früchte oder Wurzeln. Diese können in Form unreifer, gereifter, reifer, überreifer, gealterter oder auch beschädigter Ausgangsmaterialien vorliegen. Das pflanzliche Ausgangsmaterial kann in vollständig intakter Form, beschädigt, zerkleinert, geschält, gepresst, gemahlen oder in anderer Weise desintegriert sein/vorliegen, hierzu gehören auch Schrote oder Mehle, die beispielsweise nach einer mechanischen Extraktion von Ölen entstehen, sogenannte Presskuchen. Ferner Brauereirückstände (z.B. Treber oder Trebermehl) oder Trester der Mostherstellung oder Oliventrester oder Rübenschnitzel. Ferner Rückstände von Kakaobohnen. Des Weiteren Rückstände von Gemüse- oder Fruchtzubereitungen, wie Strunk von Kohlgemüsen oder Schalen, z.B. von Kartoffeln. Ferner sämtliche pflanzliche *Samen,* wie z. B. Leinsamen, Mohn, Chia,; *Körner,* z.B. von Raps, Leindotter, Hafer, Hanf, Weizen, Buchweizen, Roggen, Mais, Sonnenblumen, Jatropha; *Kerne,* z. B. von Äpfeln, Trauben, Apfelsinen, Avocado; *Bohnen,* wie Sojabohnen, Kidney-Bohnen, Erbsen, Linsen, Lupinen oder Sesam; *Gemüse,* wie Blumenkohl, Kohlrabi, Sellerie; *Rübengewächse,* wie Karotten oder Zuckerrüben; *Früchte,* wie Äpfel, Birnen, Quitten, Bananen, Orangen, Zitronen oder Trauben; *Beeren,* wie Hagebutten, Brombeeren, Erdbeeren, Holunder; ferner *Knollengewächse und Wurzeln,* wie Kartoffeln, rote Bete, Batate, Kurkuma, Maniok, Meerrettich, Sellerie, Radieschen, Teufelskralle oder Ginko; ebenso *Gurken,* wie Salat- oder Gewürzgurken, ferner Auberginen oder Zucchini; *Nüsse,* wie Mandeln, Haselnüsse, Erdnüsse, Walnüsse oder Kokosnüsse. Ferner Zuckerrohr.

### Proteine

Unter den Begriff "Proteine" wie hierin verwendet, werden Makromoleküle verstanden, die aus Aminosäuren bestehen, die durch Peptidbindungen miteinander verbunden sind. Die hierin gemeinten Proteine weisen eine Anzahl von > 100 Aminosäuren auf. Typische Vertreter sind beispielsweise Albumine oder Globuline.

### Kohlenhydrate

Unter den Begriff "Kohlenhydrate", wie hierin verwendet, fallen alle von C3 bis C6-Zuckermoleküle sowie Verbindungen, die hieraus zusammengesetzt sind. Dabei kann es sich um wasserlösliche Verbindungen handeln, wie beispielsweise Monosaccharide, wie Hexosen, darunter Glucose oder Fructose sowie Pentosen, darunter Ribose und Ribulose sowie Triosen: Glycerinaldehyd, Dihydroxyaceton; des Weiteren Disaccharide, wie Maltose, Saccharose, Lactose oder um wasserunlösliche Verbindungen, wie z.B. bei Polysacchariden, wie Dextrane, Cyclodextrine, Stärke oder Cellulose. Bei Stärke sind Amylose und Amylopektin zu unterscheiden. Hierzu gehören ferner Glykogen, Chitin, Callose, Fruktane, Pektine. Ebenso auch komplexe Gebilde aus Kohlenhydratagglomeraten, wie dies bei einem Stärkekorn der Fall ist.

### Cellulose-basierte Fasern

Unter den Begriff "cellulose-basierte Fasern", wie hierin verwendet, werden alle korpuskulären Strukturen der pflanzlichen Ausgangsmaterialien, die aus einem primären Cellulose-Grundgerüst bestehen, zusammengefasst, die mindestens 2 der nachfolgenden Charakteristika aufweisen:
- einen Ursprung aus einem pflanzlichen Ausgangsmaterial
- ein Aspektverhältnis von einem Längs- und Querdurchmesser von 1:1 bis 1.000:1
- ein Wasserbindungsvermögen von > 200 Gew%
- einem Anteil an chemischen Verbindungen und funktionellen Gruppen von > 2,5 Gew%, die nicht den Elementen C, H oder O entsprechen.

Die erfindungsgemäßen cellulose-basierten Fasern weisen dreidimensionale Raum-und Oberflächenstrukturen auf. Die erfindungsgemäßen cellulose-basierten Fasern haben vorzugsweise eine flächige und/oder korpuskuläre Geometrie. Insbesondere zeichnen sie sich durch ein niedriges Längengewicht von < 70mg/m aus.

### Lignin-reiche Schalenanteile

Unter dem Begriff "lignin-reiche Schalenanteile", wie hierin verwendet, werden alle Hüll- und Stützstrukturen des pflanzlichen Ausgangsmaterials zusammengefasst, die einen Ligningehalt von > 30 Gew% aufweisen. Die bevorzugten lignin-reichen Schalenanteile weisen eine Gewichtsanteil des Lignins von > 40 Gew%, mehr bevorzugt von > 50 Gew%, weiter bevorzugt von > 60 Gew% und noch weiter bevorzugt von > 80 Gew% auf. Sie haben eine spezifische äußere Gestalt, die flach und polymorph bis korpuskulär und rund sein kann. Die Dimensionen hängen vom Herstellungsprozess ab und können von wenigen Mikrometern bis einigen Millimetern betragen.

### Solide Feststoffe

Unter dem Begriff "solide Feststoffe" werden hierin verstanden, organische Verbindungen, die Raumgebilde ausbilden, die einen Filter mit einem Siebmaß von 10µm nicht passieren. Prinzipiell können die soliden Feststoffe vollständig wasserunlöslich oder wasserlöslich sein.

### Desintegration

Unter dem Begriff "Desintegration" werden hierin alle Verfahren zusammengefasst, die zu einer Auftrennung wasserundurchlässiger Gewebestrukturen oder Texturen des Ausgangsmaterials führen, wodurch eine vollständige Kontaktierung der hierin enthaltenen Hauptkonstituenten mit einer erfindungsgemäßen wässrigen Lösung, enthaltend Aufschlussverbindungen, erfolgen kann. Unter die Definition fallen somit alle Verfahren, die zur Schaffung von Rissen, Lücken oder Spalten von Hüll- oder Schalenmaterialien des pflanzlichen Ausgangsmaterials führen, bis hin zu einem vollständigen Aufschluss mit Freilegung der Oberflächen der Konstituenten des pflanzlichen Ausgangsmaterials. Entscheidend ist dabei, dass durch eine Desintegration die Benetzung der Oberflächen der Konstituenten des pflanzlichen Ausgangsmaterials mit den gelösten Verbindungen zur Ab-/Auftrennung des Ausgangsmaterials ermöglicht wird. Eine definitionsgemäße Desintegration ist somit gleichbedeutend mit der Herstellung einer Benetzbarmachung von Konstituenten des Ausgangsmaterials für die wässrigen Aufschlusslösungen und den darin enthaltenen Verbindungen.

### Wässrige Aufschlusslösung

Unter dem Begriff "wässrige Aufschlusslösung" wird hierin verstanden, eine wässrige Lösung von gelösten Verbindungen zur Ab-/Auftrennung von Konstituenten des Ausgangsmaterials. In einer bevorzugten Verfahrensausführung sind die Verbindungen zur Ab-/Auftrennung von Konstituenten des Ausgangsmaterials eine oder mehrere Aminosäure(n) und/oder Peptid(e), die in Wasser in einer vollständig gelösten Form vorliegen. Bei dem Wasser kann es sich um geklärtes, geklärtes und gereinigtes Prozesswasser, ein entionisiertes, teil-entionisiertes, ein Brunnen- oder Stadtwasser handeln. Die bevorzugten Verbindungen, die zur Ab-/Auftrennung von Konstituenten des Ausgangsmaterials in einer gelösten Form vorliegen, sind natürlich vorkommende Aminosäuren und/oder Peptide, die aus diesen Aminosäuren bestehen oder diese enthalten. Bei den erfindungsgemäßen wässrigen Aufschlusslösungen handelt es sich vorzugsweise um Lösungen aus einer, zwei oder mehreren Aminosäure(n) und/oder Peptid(en), die in der Einzel- und/oder Gesamtkonzentration in einem Bereich von 10µmol/l bis 3mol/l, mehr bevorzugt zwischen 1mmol/l und 1mol/l und weiter bevorzugt zwischen 0,1mol/ und 0,5 mol/l vorliegen. Es kann sich dabei um L- oder D-Formen oder Racemate der Verbindungen handeln. Bevorzugt ist die Verwendung der L-Form. Bevorzugt sind dabei Alanin, Arginin, Asparagin, Asparaginsäure, Cystein, Glutamin, Glutaminsäure, Glycin, Histidin, Isoleucin, Leucin, Lysin, Methionin, Phenylalanin, Prolin, Serin, Treonin, Tryptophan, Thyrosin und Valin. Besonders bevorzugt sind die Aminosäuren Arginin, Lysin, Histidin und Glutamin. Ferner bevorzugt sind Derivate der vorgenannten Aminosäuren. Bei den erfindungsgemäß einsetzbaren Peptiden kann es sich um Di-, Tri- und/oder Polypeptide handeln. Die erfindungsgemäßen Peptide haben mindestens eine funktionelle Gruppe, die ein Proton bindet oder binden kann. Das bevorzugte Molekulargewicht liegt dabei unter 500kDa, mehr bevorzugt < 250kDa weiter bevorzugt < 100kDa und insbesondere bevorzugt < 1000Da. Die bevorzugten funktionellen Gruppen sind dabei insbesondere eine Gunanidin-, Amidin-, Amin-, Amid-, hydrazino-, hydrazono-, hydroxyimino-oder nitro-Gruppe. Die Aminosäuren können dabei eine einzige funktionelle Gruppe aufweisen oder mehrere der gleichen Verbindungsklasse oder ein oder mehrere funktionelle Gruppe(n) unterschiedlicher Verbindungsklassen enthalten. Vorzugsweise weisen die erfindungsgemäßen Aminosäuren und Peptide mindestens eine positive Ladungsgruppe auf, bzw. haben eine positive Gesamtladung. Besonders bevorzugte Peptide enthalten mindestens eine der Aminosäuren Arginin, Lysin, Histidin und Glutamin in einer beliebigen Anzahl und sequentiellen Folge. Besonders bevorzugt sind Aminosäuren und/oder Derivate dieser, die mindestens eine Guanidino- und/oder Amidinogruppe enthalten. Als Guanidinogruppe wird der chemische Rest H₂N-C(NH)-NH- sowie dessen cyclische Formen bezeichnet und als Amidinogruppe der chemische Rest H₂N-C(NH)- sowie dessen cyclische Formen. Diese Guanidinoverbindungen und Amidinoverbindungen haben vorzugsweise einen Verteilungskoeffizienten K_{OW} zwischen n-Octanol und Wasser von keiner als 6,3 (K_{OW} < 6,3). Insbesondere bevorzugt sind Argininderivate. Argininderivate sind definiert als Verbindungen, welche eine Guanidinogruppe und eine Carboxylatgruppe oder eine Amidinogruppe und eine Carboxylatgruppe aufweisen, wobei Guanidinogruppe und Carboxylatgruppe oder Amidinogruppe und Carboxylatgruppe durch mindestens ein Kohlenstoffatom voneinander entfernt sind, d.h. sich zumindest eine der folgenden Gruppen zwischen der Guanidinogruppe oder der Amidinogruppe und der Carboxylatgruppe befindet: -CH₂-, -CHR-, -CRR'-, worin R und R' unabhängig voneinander beliebige chemische Reste darstellen. Hierzu zählen beispielsweise bei Amidinopropionsäure, Amidinobuttersäure, Guanidinopropionsäure oder Guanidinobuttersäure, Guanidinoessigsäure, Kreatin, Glycocyamin.

Ferner geeignet sind Di- Tri- oder Oligipeptide sowie Polypeptide, die aus einer, zwei oder mehreren Aminosäuren zusammengesetzt sind. Bevorzugt sind kurzkettige Peptide, z. B. RDG. Besonders bevorzugt sind Peptide, die aus Aminosäuren bestehen, die sowohl hydrophobe als auch hydrophile Seitengruppen aufweisen, wie beispielsweise (Angaben gemäß Namensalphabt der Aminosäuren) GLK, QHM, KSF, ACG, HML, SPR, EHP oder SFA. Weiter besonders bevorzugt sind Peptide, die sowohl hydrophobe und kationische und/oder anionische Seitengruppen aufweisen, wie beispielsweise RDG, BCAA, NCR, HIS, SPR, EHP oder SFA. Weitere Beispiele mit 4 Aminosäuren sind NCQA, SIHC, DCGA, TSVR, HIMS oder RNIF oder mit 5 Aminosäuren sind HHGQC, STYHK, DCQHR, HHKSS, TSSHH, NSRR. Besonders bevorzugt sind RDG, SKH oder RRC.

### Verteilungslösung

Unter dem Begriff "Verteilungslösung", der synonym mit dem Begriff "Verteilungsvolumen" hierin verwandt wird, wird verstanden: eine Wasserphase, die einem Reaktionsgemisch hinzugegeben wird, die eine Verteilung und Vereinzelung wasserlöslicher gelöster, löslicher solider und komplexer unlöslicher Bestandteile des Ausgangsmaterials ermöglicht. In einem erfindungsgemäßen Verteilungsvolumen liegen diese Bestandteile in einer leicht vereinzelbarer Form vor. Das Vorliegen eines ausreichend großen Verteilungsvolumens kann durch eine Probeentnahme, bei der die Vereinzelbarkeit der gelösten und suspendierten Bestandteile durch Techniken und Verfahren, wie hierin beschrieben, festgestellt wird, geprüft werden.

### Kondensierung/ Aggregation/Komplexierung

Unter den Begriffen "Kondensierung/Aggregation/Komplexierung" werden alle physikalischen und/oder chemischen Prozesse zusammengefasst, die zu einem Zusammenschluss gleicher und/oder ungleicher organischer und/oder anorganischer Verbindungen führt, wodurch Kondensate oder Aggregate oder Komplexe entstehen, die sich als Feststoff aus einem wässrigen Prozessgemisch mittels geeigneter Separationsverfahren von der Wasserphase separieren lassen. Unter dem Begriff "Aggregat" wird verstanden: eine räumliche Annäherung von makromolekularen Strukturen, die hierdurch ein messbares Raumgebilde formieren. Die Bindungskräfte sind elektrostatisch durch hydrophobe oder hydrophile Wechselkräfte. Im Allgemeinen bedeutet "Aggregation" eine Anhäufung oder Ansammlung von Atomen bzw. Molekülen und/oder Ionen zu einem größeren Verband, dem Aggregat. Die Anhäufung oder Ansammlung wird durch Van-der-Waals-Kräfte, Wasserstoffbrückenbindung und/oder andere chemische oder physiko-chemische Bindungsarten bewirkt. Unter "Komplexen" werden hierin makroskopisch sichtbare Formationen verstanden, die durch Kondensate und/oder Aggregate zu einer größeren Verbundstruktur zusammengeschlossen sind. Bei den Kondensaten/Aggregaten und Komplexen sind aufgrund der geringen Bindungsenergien die Einzelverbindungen leicht aus den Verbundstrukturen, z. B. durch einen Mischprozess, herauslösbar und können vereinzelt werden. Im Gegensatz hierzu sind Koagulate Raumgebilde von klein- bis makromolekularen Verbindungen, die durch eine chemische Reaktion entstehen, bei der kovalente Bindungen zwischen den molekularen Strukturen entstehen und/oder gespalten werden. Bei einem Koagulat lassen sich die Einzelverbindungen nicht oder nur in einem geringen Maß durch einen Lösungsprozess in Wasser voneinander separieren bzw. vereinzeln. Die hierin gemeinte Kondensierung/Aggregation/Komplexierung grenzt sich ab von einer Koagulation, die insbesondere durch eine Fällungsreaktion mit einer (starken) Säure erfolgt, bei der es zu einer Denaturierung kommt, bei der zumindest die ursprüngliche Tertiärstruktur der Proteine in Teilen oder vollständig nicht mehr vorliegt. Dies ist beispielsweise erkennbar an einer geringeren Wasserbindungskapazität.

### Aggregationsmittel

Unter dem Begriff "Aggregationsmittel" wird hierin verstanden, eine oder mehrere organische und/oder anorganische Verbindungen, die eine Kondensierung/Aggregation/Komplexierung von in Wasser gelösten Konstituenten/Verbindungen eines wässrigen Prozessgemisches initiieren, unterhalten und/oder beschleunigen. Sie können dabei u. a. eine katalytische, destabilisierende, verdrängende und/oder freisetzende Wirkung auf zu kondensierenden/aggregierenden oder komplexierenden Bestandteile haben, die zu einem Zusammenschluss der Konstituenten/Verbindungen führt. Dabei können die Verbindungen auch durch eine Änderung des pH und/oder der Salinität diese Wirkung bedingen und/oder selbst an dem Zusammenschluss beteiligt sein.

### Organische Verbindungen

Der Begriff "organische Verbindungen" umfasst alle organischen Verbindungen biogenen Ursprungs, die durch eines der hierin beschriebenen Verfahren aus biogenen Ausgangsmaterialien gelöst werden können. Die organischen Verbindungen können folgenden Verbindungsklassen zugeordnet werden, ohne sich auf diese zu beschränken: Wachse, Wachssäuren, Lignine, Farbstoffe, wie Carotine und Carotinoide, Chlorophylle, sowie deren Abbauprodukte, weiterhin Phenole, Phytosterole, insbesondere ß-Sitosterol und Campesterol sowie Sigmasterol, Sterole, Sinapine, Squalene. Phytoöstrogene, wie z.B. Isoflavone oder Lignane. Ferner, Steroide sowie deren Derivate, wie Saponine, weiterhin Glycolipide sowie Glycoglycerolipide und Glycerosphingolipide. Ebenso Glycoside, Liporoteine, Lignine, Phytat bzw. Phytinsäure sowie Glucoinosilate. Proteine, darunter Albumine, Globuline, Oleosine, Vitamine, wie z.B. Retinol, (Vitamin A).

### Geruchs- und Geschmacksstoffe

Der Begriff "Geruchs- und Geschmacksstoff" wird hierin auch synonym mit Aromastoff verwandt. In praktisch allen organischen Gemischen biogener Herkunft sind organische Verbindungen vorhanden, die zu einer sensorischen Wahrnehmung im Sinne eines Geschmacks oder eines Geruchs führen. Typische Verbindungsklassen sind Alkaloide, Alkohole, Aldehyde, Aminosäuren, aromatische Kohlenwasserstoffe, Ester, Lactone, cyclische Ether, Furane, Furanoide, freie Fettsäuren, Flavonole, Glycoside, Ketone, gesättigte und ungesättigte Kohlenwasserstoffe, Enamin-Ketone, Ketopiperazine, Isoprenoide, Mono-Terpene, Terpene, cyclische Terpene, Triterpene, Triterpenoide, Tetraterpene, Sesquiterpene, Sequiterpenoide, Sterole, Phytosterole, Purinderivate, Phenylpropanoide, Phenole und/oder Hydroxyzimtsäurederivate.

### Pflanzenfarbpigmente und Farbstoffe

Farbstoff sind beispielsweise in die folgenden Gruppe eingeteilt: Chlorophylle sowie ihrer Degradierungsprodukte, wie Pheophyline, Chlorophyllide, Pheophorbide, Phyropheophytine, Chlorine, Rhodine und Purpurine. Ferner Carotine oder Carotinoide. Daneben aber auch andere Verbindungsklassen, wie die der Flavonoide, Curcumine, Anthrocyane, Betaine, Xanthophylle, zu denen auch Carotine und Lutein zählen, Indigo, Kampnerol.

### Geklärte Wasserphase

Unter einer "geklärten Wasserphase" oder "geklärte Prozesswasserphase" wird hierin verstanden, die Wasserphase, die erhalten wird, nach einer erfindungsgemäßen Kondensation/Aggregation/ Komplexierung von löslichen gelösten organischen und/oder anorganischen Bestandteilen sowie deren Abtrennung. Der Begriff "geklärt" steht dabei für eine optisch klare Lösung, in der sich keine oder nur vereinzelt Schwebstoffe befinden. Dies ist quantifizierbar, z.B. durch eine Trübungsmessung, wobei ein Wert von 20 FTU nicht überschritten wird. Der Begriff "geklärt" beinhaltet aber auch eine Entfernung von gelösten organischen Verbindungen. Verfahren, mit denen eine Quantifizierung noch hierin befindlicher organischer Verbindungen möglich ist, sind z.B. die HPLC und/oder MS.

### Gereinigte Wasserphase

Unter einer "gereinigten Wasserphase" wird hierin verstanden, eine geklärte Wasserphase oder geklärte Prozesswasserphase, wie hierin definiert, bei der eine Abreicherung von hierin enthaltenen gelösten oder ungelösten organischen und/oder anorganischen Verbindungen sowie Feststoffen auf < 0,5 Gew% erreicht worden ist. Dies kann beispielsweise überprüft werden durch eine Elementaranalyse (z. B. ICP) oder Atomabsorptionsspektroskopie eines Trocknungsrückstandes.

### Methoden

### Verfahren zur Bereitstellung von pflanzlichem proteinhaltigem biogenen Ausgangsmaterial.

Entsprechend der unterschiedlichen Herkunft und den Gewinnungsmöglichkeiten der erfindungsgemäß verwendbaren Ausgangsmaterialien, können diese in unterschiedlicher/m Form und Zustand vorliegen. So kann es sich beispielsweise um ganze/intakte Samen, Körner, Kerne, Nüsse, Gemüse, Früchte, Blüten, Fruchtknoten oder Wurzeln handeln und/oder um ganz oder teilweise aufgeschlossene, aufgebrochene, zerkleinerte, zerriebene, zerquetschte oder gepresste Pflanzenmaterialien und/oder pflanzliche Materialien, bei denen teilweise oder vollständig ein fermentativer oder desintegrativer Prozess, insbesondere durch eine(n) Autolyse/mikrobiellen Abbau/chemisch-physikalische Reaktion, stattgefunden hat und/oder es sich um Rückstände aus der landwirtschaftlichen Produktion /der Nahrungsmittel-Herstellung oder-Verwertung handelt. Bevorzugt sind maximale Durchmesser verteilbarer Partikel der pflanzlichen Ausgangsmaterialien zwischen 100µmund 100cm, mehr bevorzugt zwischen 0,5 mm und 50cm, weiter bevorzugt zwischen 1mm und 20cm und weiter bevorzugt zwischen 2mm und 5 cm.

Bevorzugt ist daher ein Verfahren, bei dem pflanzliche Ausgangsmaterialien in einem Behältnis zur zusätzlichen Aufnahme einer Flüssigkeit bereitgestellt werden.

### Methoden zur Zubereitung und Verwendung von Aufschlusslösungen

Die erfindungsgemäßen Aufschlusslösungen werden mit den erfindungsgemäßen Verbindungen zur Ab-/Auftrennung von Konstituenten des Ausgangsmaterials, wie hierin definiert, hergestellt. Hierzu wird/werden eine oder mehrere der Verbindungen in Wasser vollständig gelöst, wobei es sich bei dem Wasser um ein geklärtes oder geklärtes und gereinigtes Prozesswasser, ein vollständig ionenfreies Wasser oder Brunnen- sowie Stadtwasser handeln kann. Vorzugsweise stellt sich ein pH der Lösung kationischer Aminosäuren oder Peptide im Bereich von 7 bis 14, mehr bevorzugt zwischen 8 und 13 und weiter bevorzugt zwischen 8,5 und 12,5 ein. In einer Ausführungsform kann der pH durch die Zugabe einer Säure oder einer Base auf einen beliebigen pH-Bereich zwischen 6 und 14 eingestellt werden. Dabei können Säuren und Basen, die im Stand der Technik bekannt sind, verwendet werden, wie beispielsweise Natronlauge oder HCl.

Den Lösungen können Zusatzstoffe hinzugegeben werden, die den Aufschluss und die Gewinnung von cellulose-basierten Fasern verbessern oder beschleunigen oder andere Bestandteile des Ausgangsmaterials desintegrieren und/oder lösen. Derartige Verbindungen umfassen die folgenden Verbindungen, ohne hierauf beschränkt zu sein, wie beispielsweise: Harnstoff, NH₃, Triethylamin; ionische oder nicht-ionische Tenside, wie SDS oder DMSO; Antioxidantien oder NaSO₃, Natriumbisulit oder NaSO₄. Diese Verbindungen können einzeln oder kombiniert, in einer Konzentration zwischen 0,01Gew% und 50 Gew%, in der Aufschlusslösung vorliegen. Die Applikation kann tröpfchen-, tropfen- oder strahlweise, kontinuierlich oder diskontinuierlich zu, in und/oder auf das Ausgangsmaterial erfolgen.

### Verfahren zur Desintegration von proteinhaltiges biogenes Ausgangsmaterials.

Für die Durchführung der erfindungsgemäßen Ab-/Auftrennung von Konstituenten des Ausgangsmaterials ist es erforderlich, dass die erfindungsgemäßen Verbindungen zur Ab-/Auftrennung der Konstituenten das Ausgangsmaterial vollständig durchdringen und zumindest an den Grenzflächen die Konstituenten in einem hydratisierten Zustand vorliegen. Hierzu ist eine Durchdringbarkeit der wässrigen Aufschlusslösung erforderlich. Im Falle einer ungenügenden Durchdringbarkeit kann ein mechanisches und/oder physiko-chemisches Desintegrationsverfahren angewendet werden. Während mechanische Desintegrationsverfahren vorzugsweise vor oder zum Zeitpunkt des Verfahrensschritts 1 erfolgen sollten, kann in einer bevorzugten Verfahrensausführung die physiko-chemische Desintegration in den Verfahrensschritten 2a) bzw. 2) erfolgen. Bevorzugt hierbei ist eine thermische Desintegration. Hierzu bevorzugt ist eine Temperatur von vorzugsweise 80C° bis 150°C, mehr bevorzugt zwischen 90°C und 140 °C und weiter bevorzugt zwischen 99 °C und 121°C. Bevorzugt ist eine Druckbeaufschlagung, die gleichzeitig mit der Erhitzung erfolgt.

Bevorzugt ist die Verwendung von Aminosäure- und/oder Peptid-Lösungen für eine Desintegration, bei einer mechanischen und/oder physiko-chemischen Desintegration des Ausgangsmaterials. Bevorzugt ist eine Lösung, enthaltend gelöste Aminosäuren und/oder Derivate, die mindestens eine Guanidino- und/oder Amidinogruppe enthalten, zur physiko-chemischen Desintegration von Ausgangsmaterial. Besonders bevorzugt ist eine Lösung, enthaltend Arginin und/oder Arginiderivate in gelöster Form, zur thermischen Desintegration von Ausgangsmaterialien. Ferner bevorzugt ist eine Aufschlusslösung in der mindesten eine Verbindung umfassend Harnstoff, NH₃, Triethylamin; ionische oder nicht-ionische Tenside, wie SDS oder DMSO, oder NaSO₃ oder Natriumbisulit enthält. Bevorzugt ist eine Desintegration von Ausgangsmaterialien mit einer Lösung gelöster Aminosäuren- und/oder Peptide.

In einer bevorzugten Verfahrensausführung erfolgt bei pflanzlichen Rohstoffen eine Desintegration, indem der Rohstoff ganz, in Teilen oder mechanisch zerkleinert, in ein Wasserbad eingelegt wird und eine Erhitzung solange erfolgt, bis dieser so weich ist, dass er durch eine leichte Krafteinwirkung, z. B. durch Zerdrücken mit den Fingern, zu einer breiartigen oder flüssigen Phase zerfällt. In einer besonders bevorzugten Ausführungsform erfolgt eine Desintegration des pflanzlichen Ausgangmaterials durch Einlegen in eine der erfindungsgemäßen wässrigen Lösungen, enthaltend eine erfindungsgemäße wässrige Aufschlusslösung. Dabei kann prinzipiell das Volumen- bzw. Gewichtsverhältnis frei gewählt werden, es ist allerdings vorteilhaft, wenn das pflanzliche Ausgangsmaterial vollständig von der Aufschlusslösung benetzt wird. Die Dauer der Exposition mit der Aufschlusslösung hängt von den eingesetzten pflanzlichen Ausgangsmaterialien ab. Bevorzugt ist eine Dauer zwischen 1 Minute und 48 Stunden, weiter bevorzugt zwischen 10 Minuten und 14 Stunden und weiter bevorzugt zwischen 20 Minuten und 6 Stunden. Die Temperatur bei der die Exposition des pflanzlichen Ausgangsmaterials mit den wässrigen Aufschlusslösungen erfolgt, ist prinzipiell frei wählbar. Bevorzugt ist eine Temperatur zwischen 5° und 140°C, weiter bevorzugt zwischen 10° und 120°C und weiter bevorzugt zwischen 15° und 90°C. Weiter bevorzugt ist eine zuvorige und/oder gleichzeitige und/oder nachträgliche Behandlung des pflanzlichen Ausgangsmaterials mit Verbindungen, die eine Desintegration bzw. chemische Reaktion von Ligninverbindungen bewirken. Bevorzugt ist die Verwendung von Sulfit und Sulfatverbindungen. Besonders bevorzugt ist Natriumbisulfit.

### Methoden zur Durchführung des Verfahrensschritts 2a)

In diesem Verfahrensschritt muss die Benetzung der Oberflächen der Konstituenten innerhalb des vorzugsweise pflanzlichen Ausgangsmaterials gewährleistet werden. Die vollständige Durchdringung kann beispielsweise durch die Bestimmung des Feuchtegehalts überprüft werden, der vorzugsweise > 20 Gew% beträgt. Eine vollständige Quellung kann beispielsweise daran erkannt werden, dass das gequollene Material keine weitere Wassermenge mehr binden kann, erkenntlich dadurch, dass eine weitere Zugabe von Wasser zu keiner weiteren Volumenzunahme des gequollenen homogenen Materials führt und bei einer Zentrifugation (2.000g) sich nur minimale freie flüssige Phase separiert. Das Volumen der wässrigen Lösungen, enthaltend gelöste Aminosäuren und/oder Peptide, wird in einem Massenverhältnis von 0,5:1 bis 10:1, mehr bevorzugt zwischen 1:1 und 8:1 und weiter bevorzugt zwischen 1,2:1 und 4:1 dem Ausgangsmaterial zugesetzt. Bevorzugt ist eine Verfahrensausführung bei einer Temperatur zwischen 6 und 90°C, weiter bevorzugt zwischen 10 und 60°C und weiter bevorzugt zwischen 18 und 40°C. Die Dauer der Durchdringungsphase hängt naturgemäß von der Art und Beschaffenheit des Ausgangsmaterials ab. Bevorzugt ist eine Dauer zwischen 5 Minuten und 24 Stunden, mehr bevorzugt zwischen 10 Minuten und 12 Stunden und weiter bevorzugt zwischen 20 Minuten und 6 Stunden.

Mit einem einfachen Testverfahren lässt sich bestimmen, ob ein Gemisch dieses Prozessschritts geeignet ist für eine Zuführung zu dem nächsten Prozessschritt. Herzu wird eine repräsentative Probe aus dem Gemisch entnommen und in Wasser (25°C) in einem Massenverhältnis von 1:20 gegeben und für 2 Minuten mit 200 rpm agitiert. Anschließend wird die gesamte Suspension filtriert (Siebmaß 100µm). Der Siebrückstand wird visuell oder mikroskopische auf das Vorliegen von Aggregaten aus verschiedenen Konstituenten des pflanzlichen Ausgangsmaterials untersucht. Liegen keine Aggregate z.B. aus löslichen und unlöslichen organischen Verbindungen vor, so ist eine ausreichende Ab-/Auftrennung der Konstituenten des Ausgangsmaterials erfolgt und der Prozessschritt ist abgeschlossen.

In einer Verfahrensvariante erfolgt die Durchtränkung des Ausgangsmaterials mit einer der Aufschlusslösungen während der Anwendung eines der Desintegrationsverfahren oder unmittelbar im Anschluss hieran. Diese Verfahrensvariante ist insbesondere bei Ausgangsmaterialien mit einem hohen Wassergehalt, wie bei rohen Gemüsen, Knollen oder Wurzeln, vorteilhaft. In einer Verfahrensvariante erfolgt die Durchtränkung unmittelbar zusammen mit Verbindungen, die eine Desintegration des pflanzlichen Ausgangsmaterials ermöglichen/beschleunigen. Hierbei findet im Rahmen der Desintegration auch eine Durchtränkung des Pflanzenmaterials mit den Verbindungen der Aufschlusslösung statt. Prinzipiell kann diese Verfahrensvariante wie oben beschrieben ausgeführt werden.

Bevorzugt ist ein Verfahren zur Separation von Konstituenten eines pflanzlichen Ausgangsmaterials, bei dem gleichzeitig eine Desintegration und Durchdringung mit einer wässrigen Aufschlusslösung erfolgt.

### Methoden zur Durchführung des Verfahrensschritts 2b)

In einer bevorzugten Ausführungsform wird das Ab-/Auftrennungsgemisch der Prozessstufe 2a) in Wasser gelöst, um die ab-/aufgetrennten wasserlöslichen Konstituenten vollständig zu hydratisieren, wodurch sie in vereinzelbarer Form und ohne Anhaftungen von anderen Konstituenten vorliegen. Hierzu kann geklärtes Prozesswasser subsequenter Verfahrensstufen verwandt werden oder entionisiertes oder nicht weiter behandeltes Stadt- oder Brunnenwasser.

Die Ermittlung des Wasservolumens, das ausreichend groß ist, um in der Verteilungsphase eine vollständige Hydratisierung der wasserlöslichen Konstituenten zu ermöglichen, die eine Vereinzelbarkeit der gelösten und unlöslichen Konstituenten des Ausgangsmaterials gewährleistet, erfolgt vorzugsweise, indem mit einer Probe der vorherigen Prozessstufe (z.B. 10g des Ab-/Auftrennungsgemisches) eine Verdünngungsreihe hergestellt wird. Nach einer Rührphase von 3 Minuten erfolgt die Filtration (Siebmaß 100µm) der Suspension. Der Filterrückstand wird analysiert (visuell oder mikroskopisch) auf Anlagerungen/Anhaftungen von wasserlöslichen und mit Wasser abspülbaren gelösten Verbindungen. Dem Filtrat wird dann eine geeignete Lösung eines Aggregationsmittels in ansteigender Dosierung hinzugemischt. Ein ausreichend großes Verteilungsvolumen liegt vor, wenn sowohl keine Anlagerungen/Anhaftungen an den soliden Konstituente des Ausgangsmaterials, die sich im Filterrückstand befinden, vorliegen und eine vollständig ablaufende Kondensation und/oder Aggregation und/oder Komplexierung der gelösten wasserlöslichen Konstituenten, die in dem Verteilungsgemisch vorliegen, erfolgt.

Bevorzugt ist ein Verhältnis des Wasservolumens zur Trockenmasse des Ausgangsproduktes von 5:1 bis 500:1, mehr bevorzugt von 10:1 bis 150:1 und weiter bevorzugt von 15:1 bis 50:1. Die Art der Einbringung bzw. in Kontaktbringung des Ab-/Auftrennungsgemisches und der Wasserphase dieser Prozessstufe ist beliebig. Bevorzugt ist ein Eintrag, der mittels eines Hochleistungsschermischers oder einem anderen Intensivmischer, zusammen mit der Wasserphase erfolgt. Bevorzugt ist ein Temperaturbereich der wässrigen Suspension zwischen 6 und 90°C, weiter bevorzugt zwischen 10 und 60°C und weiter bevorzugt zwischen 18 und 40°C. Die Dauer des Verteilungsprozesses ist beliebig, bevorzugt ist eine Dauer von 1 Minute bis 24 Stunden, mehr bevorzugt von 5 Minuten bis 5 Stunden und weiter bevorzugt von 10 Minuten bis 1 Stunde. Bevorzugt ist ein pH der Verteilungslösung zwischen 5 und 13, mehr bevorzugt zwischen 7 und 12,5 und weiter bevorzugt zwischen 7,5 und 11.

Der Verteilungsprozess ist ausreichend und abgeschlossen, wenn es bei einer repräsentativen Probe, die dem Verteilungsgemisch entnommen wird und anschließend durch ein grobes (Maschenweite 1mm) und durch ein feines Sieb (Siebmaß 100µm) filtriert wird und im Filterrückstand mikroskopisch oder visuell keine sichtbaren Aggregate von verschiedenen Konstituenten der pflanzlichen Ausgangsmaterialien zu erkennen sind.

### Methoden zur Durchführung des Prozessschritts 2

In einer bevorzugten Ausführungsart wird das aufzuschließende proteinhaltige biogene Ausgangsmaterials mit einem Volumen der wässrigen Aufschlusslösung in Kontakt gebracht, das gleichzeitig eine ausreichende Konzentration der Aufschlussverbindungen enthält, um eine erfindungsgemäße Ab-/Auftrennung der Konstituenten des Ausgangsmaterials zu gewährleisten und andererseits eine erfindungsgemäße Verteilung der gelösten Konstituenten in dem Wasservolumen ermöglicht. Eine Überprüfung, ob dieses Kriterium erfüllt ist, kann mit einem den zuvor und im Folgenden beschriebenen Verfahren erfolgen.

### Methoden zur Durchführung des Verfahrensschritts 3

Der Verfahrensschritt kann mit bekannten Verfahren zur Fest-/Flüssigtrennung erfolgen. Bevorzugt sind Filtertechniken, besonders geeignet hierfür sind Siebvorrichtungen, z.B. Vibrationssiebmaschinen. Bevorzugt ist eine fraktionierte Separation von unlöslichen Feststoffen. Ein Grobsieb hat vorzugsweise ein Siebmaß von 1,0 bis 4,0mm, mehr bevorzugt von 1,1 bis 2,5mm und weiter bevorzugt von 1,2 bis 2,0 mm. Ein bevorzugtes Feinsieb hat ein Siebmaß von 80 bis 250µm, mehr bevorzugt von 90 bis 180µm und weiter bevorzugt von 100 bis 160µm. Ein Feinstsieb hat bevorzugt ein Siebmaß von 5 bis 80µm, mehr bevorzugt von 10 bis 60µm und weiter bevorzugt von 15 bis 30µm. Ferner geeignet sind Bogensiebvorrichtungen, Bandfilter oder Kammerfilterpressen, ferner Siebdekanter, aber auch zentrifugale Verfahren, wie Zentrifugen oder Dekanter.

Mit diesem Verfahrensschritt wird eine faserfreie oder nahezu vollständig faserfreie Lösung erhalten, die vorzugsweise > 98 Gew%, mehr bevorzugt > 99 Gew% und am meisten bevorzugt > 99,5 Gew% der Masse an Proteinen enthält, die ursprünglich im Ausgangsmaterial vorlag. Nahezu vollständig faser-frei bedeutet hierbei > 98 Gew%. Dies lässt sich überprüfen durch beispielsweise ein Faserdurchflussmessgerät (FiberLab, Valmet). Damit ist diese Lösung auch frei von soliden Feststoffen. Der Begriff "solider Feststoff" beschreibt hierin Raumgebilde, die einen Filter mit einem Siebmaß von 10µm nicht passieren.

### Verfahren zur Durchführung des Verfahrensschritts 4)

In einer bevorzugten Ausführungsform erfolgt in diesem Verfahrensschritt eine Kondensation und/oder Aggregation und/oder Komplexierung der gelösten Proteine und/oder anderer gelöster organischer und/oder anorganischer Verbindungen des Filtrats des zuvorigen Prozessschritts. Ziel dieses Aggregierungsprozesses ist es, einen Zusammenschluss von gelösten bzw. hydratisierten löslichen Konstituenten und hierbei insbesondere der Proteine zu bewerkstelligen, unter Ausbildung einer aggregierten/kondensierten Phase/Masse, die mittels bekannter Trenntechniken separieren und möglichst wasserarm gewonnen werden kann. Bevorzugt ist ein Zusatz eines oder mehrerer geeigneten(r) Aggregationsmittels(n). Geeignete Aggregationsmittel sind beispielsweise Säuren, hierunter bevorzugt organischen Säuren, wie beispielsweise Essigsäure, Ascorbinsäure, Zitronensäure, Milchsäure, Apfelsäure, aber auch anorganische Säuren, wie HCl, Schwefelsäure oder Phosphorsäure, ferner Salze, wie beispielsweise NaCl, KCl, MgCl₂, CaCl₂ oder NaSO₄, AlCl₂ ferner Komplexbildner, wie beispielsweise EDTA aber auch Adsorptionsmittel, wie Kalziumoxid, Magnesiumoxid, Kaolin oder andere Tonmineralien. Weiterhin bevorzugt sind lösliche zweiwertige Kationen, bevorzugt von Aluminium-, Calcium- und Magnesium-Salzen. Ferner sind Kombinationen der hierin aufgeführten Kondensierungsmittel vorteilhaft, wie z. B. eine Kombination aus Zitronensäure und Aluminiumchlorid. Ferner bevorzugt sind Carbonate, wie Na-Carbonat, Na-Hydrogencarbonat oder Kalzium-Carbonat. Ferner Silikatverbindungen, besonders Na-Metasilikat, Natrium Orthosilikat, sowie andere lösliche Silikate. Der pH der wässrigen Lösungen, enthaltend gelöste Aggregationsmittel, kann prinzipiell frei gewählt werden und richtet sich nach der Effektivität der hiermit erreichbaren Kondensierung. Ggf. kann einer Lösung von Aggregationsmitteln auch ein Puffer, der den pH der Lösung einstellt, hinzugefügt werden.

Die Aggregationsmittel werden in einem Wasser, das vorzugsweise ionenfrei oder entionisiert ist, vollständig gelöst. Die Konzentration des/der Aggregationsmittel hängt von den Prozessbedingungen ab und muss individuell ermittelt werden. Generell bevorzugt ist ein Konzentrationsbereich von 1mmol bis 5 mol/l, mehr bevorzugt zwischen 100mmol und 3 mol/l und weiter bevorzugt zwischen 200mmol und 2 mol/l. Das Volumen der Lösung mit einem oder mehreren Aggregationsmitteln oder im Falle, dass Aggregationsmittel mit unterschiedlichen wässrigen Lösungen bereitgestellt werden, erfolgt kontinuierlich oder diskontinuierlich, tropfen oder strahlweise. Vorzugsweise erfolgt eine Agitation des Reaktionsgemisches, vorzugsweise erfolgt die Agitation unter leicht turbulenten oder laminaren Strömungsbedingungen, die einen Zerfall von sich ausbildenden Kondensaten/Aggregaten/Komplexen vermeidet. Vorzugsweise erfolgt eine vollständige Durchmischung des Reaktionsgemisches.

Die Dauer der Mischung ist prinzipiell frei wählbar. In einer bevorzugten Verfahrensausführung erfolgt diese nur über die Dauer der Hinzugabe eines oder mehrerer Aggregationsmittel(s) oder für eine Dauer zwischen 10 Sekunden und 5 Minuten, mehr bevorzugt zwischen 20 Sekunden und 2 Minuten.

Die Temperatur, bei der eine Kondensation und/oder Aggregation und/oder Komplexierung erfolgt, kann prinzipiell frei gewählt werden. Bevorzugt ist eine Temperatur zwischen 6 und 90°C, weiter bevorzugt zwischen 10 und 60°C und weiter bevorzugt zwischen 18 und 40°C. Der pH der wässrigen Lösung, enthaltend gelöste Verbindungen, bei dem die erfindungsgemäße Kondensation und/oder Aggregation und/oder Komplexierung der gelösten Proteine und/oder anderer gelöster Verbindungen erfolgt, liegt vorzugsweise in einem Bereich zwischen 5 und 13, mehr bevorzugt zwischen 6 und 12 und weiter bevorzugt zwischen 6,5 und 11. In einer besonders bevorzugten Ausführungsart wird im Anschluss an den Zusatz eines oder mehrerer Aggregationsmittel(s) eine Standzeit eingehalten, in der keine oder nur eine minimale Durchmischung des Gemisches erfolgt. Die Standzeit beträgt vorzugsweise zwischen 5 Minuten und 10 Stunden, weiter bevorzugt zwischen 10 Minuten und 5 Stunden und weiter bevorzugt zwischen 15 Minuten und 2 Stunden.

### Verfahren zur Durchführung des Prozessschritts 5)

In einer bevorzugten Verfahrensausführung werden die kondensierte/aggregierten/komplexierten Verbindungen dem Verfahrensschritt 4) kompaktiert, um sie von gebundene Prozesswasser zu befreien, zu reinigen, zu konditionieren und/oder leicht transportfähig zu machen oder zu formulieren. Bevorzugt ist ein Auftrag der viskösen creme-artigen Masse aus dem Verfahrensschritt 4) auf einen Bandfilter. Die bevorzugten Filter haben dabei ein Siebmaß von 50 bis 500µm, mehr bevorzugt von 80 bis 350µm und weiter bevorzugt von 100 bis 320µm. Vorzugsweise werden Filtergewebe aus Polypropylen oder anderen hydrophoben Polymerfäden verwandt. Bevorzugte Vorrichtungen sind Bandfilter, Kammerfilter, bzw. Filterpressen und Kammerfilterpressen, sowie Vakuum-Bandfilter. Ferner bevorzugt sind zentrifugale Verfahren, besonders geeignet sind Zentrifugen oder Dekanter. Bevorzugt ist der Erhalt einer kompaktierten Masse mit einem Restfeuchtegehalt von < 90 Gew%, mehr bevorzugt < 80 Gew%, weiter bevorzugt < 70 Gew% und noch weiter bevorzugt < 60 Gew% und noch weiter bevorzugt von < 40 Gew%. In einer weiter bevorzugten Ausführungsart erfolgt eine vollständige Trocknung der erhaltbaren Masse. Dies kann beispielsweis in Form einer Granulation unter Warmluft oder Vakuum erfolgen, gemäß bekannten Verfahren. Bevorzugt ist eine Suspendierung der bereits kompaktierten Masse in Wasser oder einer flüssigen Lösung mit einem Feststoffgehalt von bevorzugt 10 bis 40 Gew%. Die Suspension wird bevorzugt einer Sprüh- oder Gefriertrocknung zugeleitet.

### Verfahren zur Durchführung der Verfahrensstufe 6)

In dem Verfahrensschritt 6) erfolgt eine Bereitstellung und/oder Aufreinigung der geklärten Prozesswasserphase des Verfahrensschritts 5), sowie Reinigung der wiederverwendeten Prozesswasserphase des Verfahrensschritts 6.2), zum Erhalt einer geklärten und gereinigten Prozesswasserphase, die in subsequenten Verfahrensdurchführungen vorzugsweise in einer oder mehrerer der Verfahrensschritte 2a) und/oder 2b) oder 2) oder in einem Nebenstromverfahrensprozess als Prozesswasser wieder eingesetzt wird. In einer bevorzugten Ausführungsform erfolgt in dem optionalen Verfahrensschritt 6.1) die Bereitstellung einer Prozesswasserphase für ein Nebenstromprozessverfahren, das aus der geklärten Prozesswasserphase des Verfahrensschritts 5) und/oder einem Nebenstromprozessverfahrensschritt erhalten wird. Vorzugsweise werden hierzu in diesem Verfahrensschritt Schwebstoffe und ggf. noch vorhandenen Feinstpartikel aus dem Prozesswasser entfernt. Vorzugsweise werden hierzu Verfahren aus dem Stand der Technik verwendet. Hierzu sind insbesondere geeignet Fein- und Feinstfilter aus dem Stand der Technik. Hierdurch kann eine trübungsfreie Wasserphase erhalten werden.

In einer Ausführungsform werden Elektrolyte, wie Natrium, Kalium, Calcium, Chlorid, Eisen, Kupfer, u.a.m., beispielsweise durch eine Elektrodialyse oder lonenaustauschverbindungen entfernt. In einer weiteren Ausführungsform werden Toxine und/oder gesundheitsgefährdende Substanzen mittels einer adsorptiven Verfahrenstechnik, wie einer Säulenchromatographie oder einer Durchleitung durch ein Aktivkohlebett, vorgenommen. In einer weiteren Ausführungsform werden thermolabile Verbindungen, wie beispielsweise Enzyme, Eiweißverbindungen, Lectine oder Mikroorganismen bzw. Sporen inaktiviert und/oder denaturiert, indem das aufzureinigende Prozesswasser auf vorzugsweise > 60°C erhitzt wird.

Vorzugsweise erfolgt während der Aufreinigung einer der Prozesswasserphasen keine Entfernung/Reduktion der hierin noch vorliegenden gelösten Aminosäuren und/oder Peptide.

Mit dieser Verfahrensstufe wird eine geklärte und gereinigte Prozesswasserphase erhalten, die frei oder annähernd frei ist von: Schwebstoffen, einer Trübung, Toxinen, gesundheitsschädlichen Verbindungen und Mikroorganismen, incl. Sporen, sowie Kondensierungsmitteln und bedarfsweise auch von Elektrolyten oder Farbstoffen oder organischer Verbindungen. Vorzugsweise liegen in der geklärten und gereinigten Prozesswasserphase < 3 Gew%, vorzugsweise < 1,5 Gew% und am meisten bevorzugt < 0,5 Gew% an organischen Verbindungen vor, die nicht einer der erfindungsgemäß eingesetzten gelösten Aminosäuren und/oder Peptiden entspricht.

### Verfahren zur Durchführung des Verfahrensschritts 7

In einer bevorzugten Verfahrensausführung erfolgt eine Wiederverwendung einer der Prozesswasserphasen in den Verfahrensausführungen dem Verfahrensschritt 7).

In einer bevorzugten Verfahrensausführung wird die geklärte Prozesswasserphase des Verfahrensschritts 6.1) dem Reaktionscontainer/Reaktionsgemisch der Nebenstromprozessschritt 3-I) zugeleitet in der prozessspezifischen Menge und Temperatur.

In einer weiteren bevorzugten Ausführungsform wird die geklärte und in einem Nebenstromprozessverfahren wiederverwendete Prozesswasserphase, die in dem Verfahrensschritt 6.2) erhalten wird, ohne eine Aufreinigung in dem Verfahrensschritt 6.3) einer der Hauptverfahrensschritten 2.a), 2.b), bzw. 2) oder 3) zugeleitet. Dies kann in einem beliebigen Mischungsverhältnis mit einer Frischwasserphase erfolgen.

In einer anderen bevorzugten Verfahrensausführung wird die geklärte und gereinigte Prozesswasserphase dem Verfahrensschritt 6.4) der Verfahrensschritt 2a) zugeführt, indem die Flüssigkeit zur Lösung der erfindungsgemäßen Aminosäuren und/oder Peptide in einem geeigneten Behältnis bereitgestellt wird und mit den Aufschlussverbindungen gemischt wird, bis diese vollständig gelöst sind. In einer weiteren besonders bevorzugten Ausführungsform wird die Prozesswasserphase des Verfahrensschritts 6.4) allein oder zusammen mit einer Frischwasserphase in dem Verfahrensschritt 2b) in Form eines wässrigen Verteilungsvolumens eingeleitet.

Im Falle der alternativen Durchführung des Verfahrensschritts 2) kann die Prozesswasserphase des Verfahrensschritts 6.4 zur Lösung der Aminosäuren und/oder Peptide sowie zur Verteilung ab-/aufgetrennter Konstituenten der Ausgangsmaterialien verwandt werden.

In einer weiteren bevorzugten Ausführungsform wird die Prozesswasserphase des Verfahrensschritts 6.4) in eine der Nebenstromprozessverfahren eingeleitet. Bevorzugt ist eine Ein-/Zuleitung zu den Nebenstromprozessschritten 3-I) und/oder 4-I).

Die Eignung zur Wiederverwendung in den verschiedenen Verfahrensprozessschritten kann beispielsweise dadurch erkannt werden, indem es hierdurch zu keinen qualitativen und/oder quantitativen Veränderungen bei den erhaltbaren Produkten des Verfahrensprozesses oder der Nebenstromprozessverfahren kommt, gegenüber der Verwendung von Frischwasserphasen.

### Verfahren zur Durchführung von Nebenstromprozessverfahren

Die erfindungsgemäßen Nebenstromprozessverfahren erfolgen zur Reinigung oder zur Konditionierung bzw. Funktionalisierung oder zur Veränderung der Zusammensetzung bzw. An-/Einbringung von Verbindungen bei/an/in die aus dem Hauptprozessverfahren erhalbaren Produkte. Die Verfahren werden optional ausgeführt und können gleichzeitig oder zeitlich unabhängig zum Hauptprozessverfahren sowie untereinander erfolgen. In einer bevorzugten Verfahrensausführung können die folgenden optionalen Verfahrensstufen ausgeführt werden:
Nebenstromverfahrensschritt 3-I):

### a) Reinigung, b) Oberflächenbehandlung, c) Modifikation/Einbringen von Verbindungen von/an soliden Feststoffen, erhalten aus dem Prozessschritt 3) sowie Nebenstromverfahrensschritt 4-I):

### a) Reinigung, b) Oberflächenbehandlung, c) Modifikation/Einbringen von Verbindungen von/an kompaktierter organische Masse, erhalten aus dem Verfahrensschritt 4),

Bei den soliden Feststoffen des Verfahrensschritts 3) handelt es sich vorzugsweise um komplexe Kohlenhydrate, cellulose-basierte Faser sowie lignin-reiche Schalenanteile. Bei der kompaktierten organischen Masse des Verfahrensschritts 4) handelt es sich vorzugsweise um kompaktierte Proteine.

In einer weiteren bevorzugten Ausführungsform erfolgt eine Einbringung von anorganischen und/oder organischen Verbindungen, die die organische Masse konditioniert und/oder funktionalisiert und/oder bei der diese Verbindungen mit der organischen Masse physiko-chemisch ge-/verbunden werden. Hierdurch lassen sich in vorteilhafter Weise eine Vielzahl von vorteilhaften Effekten an/bei den soliden Feststoffen/der organischen Masse bewirken/herstellen. Diese umfassen u.a.: Oberflächeneffekte, die eingeteilt werden können als anti-statisch, hydrophil, hydrophob, oleophil, amphiphil, elektrostatisch mit einer positiven und/oder negativen Oberflächenladung, hygroskopisch und/ oder konduktiv. Die Einbringung und/oder Anbindung der anorganischen und/oder organischen Verbindungen zur Erzielung dieser Effekte erfolgt vorzugsweise, indem die eine oder die mehreren Verbindungen in einem geeigneten flüssigen Medium gelöst wird/werden und die Flüssigkeit analog zu den vorgenannten Verfahren zur Reinigung der Produkte mit den Produkten in Kontakt gebracht bzw. hiervon durchdrungen wird. Die Verweilzeit, Konzentrationen und Umgebungsbedingen sind von den erwünschten Produkteigenschaften abhängig und sind jeweils zu ermitteln.

Bevorzugte Verbindungen, die zur Konditionierung /Funktionalisierung verwandt werden können, sind u.a. Amine, wie z.B. Betain, ferner organische Säuren, wie Essigsäure, Weinsäure, Milchsäure, Apfelsäure, Mandelsäure, Gluconsäure, Stearin- oder Ölsäure, Mono-/Diglyceride, Phospholipide, Glycolipide, Glyceroglycolipide, Aminosäuren (insbesondere Arginin, Lysin und Histidin sowie Glutamin und Glutaminsäure), Mono-, Di-oder Polypeptide. Ferner Zuckerverbindungen, wie Dextrose oder Fructose, aber auch makromolekulare Oberflächenfunktionalisierungen sind möglich, wie beispielsweise mit Polysacchariden, wie Polydextrine oder Stärke. Ferner Cellulosederivate, wie Methylcellulose. Ferner bevorzugt ist die An-/Einbringung von Verbindungen in Form von Mikro-/Nanoemulsionen. Dabei besonders bevorzugt ist die Verwendung von Nanoemulsionen von kationischen Aminosäuren oder Peptiden, wie beispielsweise Arginin oder Lysin, mit organischen Säuren, wie beispielsweise Linolensäure oder Ascorbinsäure.

### Anwendungen

Die erfindungsgemäßen Verfahrensarten können prinzipiell bei allen biogenen Ausgangsmaterialien angewandt werden.

Die erfindungsgemäß hergestellten Produkte können prinzipiell in allen Lebensbereichen sowie industriellen Prozessen und Prozessabläufen eingesetzt werden.

Die erhaltbaren Proteinfraktionen können beispielsweise als Nahrungsmittel oder Nahrungsergänzungsmittel eingesetzt werden. Ferner können sie als Formulierungsmittel bei Speisezubereitungen angewandt werden. Sie sind ebenso für die Tierernährung geeignet. Das Verfahren kann ebenso zur Entfernung von Geruchs- und/oder Geschmacksstoffen und insbesondere zur Entbitterung von Ausgangsmaterialien oder von Konstituenten der Ausgangsmaterialien angewendet werden.

Cellulose-basierten Fasern, die nach dem erfindungsgemäßen Verfahren gewonnen und hergestellt wurden, sind besonders geeignet für Anwendungen in der menschlichen Ernährung. Hierbei besteht insbesondere eine Eignung als diätetischer Lebensmittelzusatzstoff für eine kalorienreduzierte Nahrungszubereitung. Darüber hinaus sind cellulose-basierte Fasern geeignet zur diätetischen Gewichtsreduktion. Zusätzlich als Ersatzstoff oder zur Reduktion von wasserlöslichen Kohlenhydraten, wie Pektinen oder Stärke, in Lebensmittelzubereitungen. Des Weiteren als Ersatzstoff oder zur Reduktion von Ölen oder Fetten in Nahrungsmittelzubereitungen. Cellulose-basierte Fasern sind geeignet, um die Darmtätigkeit zu regulieren und die Stuhlkonsistenz zu verändern/erweichen. Ferner können sie als diätetisches Anti-Opstipationsmittel eigesetzt werden. Cellulose-basierte Fasern können gleichsam bei Tieren zur Stuhlregulierung und diätetischen Gewichtsreduktion eingesetzt werden. Ferner sind cellulose-basierte Fasern geeignet für die Verdickung und Stabilisierung von flüssigen oder fließfähigen Lebensmitteln und Lebensmittelzubereitungen. Cellulose-basierte Fasern erhöhen das Wasserbinde- und Rückhaltevermögen von Lebensmittelzubereitungen. Hierdurch sind cellulose-basierte Fasern auch geeignet, um in Lebensmitteln oder Lebensmittelzubereitungen den Wassergehalt länger zu halten bzw. diese frisch zu halten und die Gefahr einer Austrocknung zu reduzieren. Ferner können cellulose-basierte Fasern verwandt werden, um Substanzen/Verbindungen oder Mikroorganismen in Lebensmittel oder Nahrungszubereitungen einzubringen und/oder darin zu stabilisieren. Hierdurch lassen sich beispielweise labile Verbindungen, wie Vitamine oder Antioxidantien, in Nahrungsmitteln oder-Zubereitungen stabilisieren/verteilen. Ferner können hierdurch Mikroorganismen in Nahrungsmittel eingebracht werden, die eine erhöhte Stoffwechselaktivität ausweisen, wie beispielsweise Hefen oder milchsäure-spaltende Bakterien. Diese Eigenschaften der cellulose-basierten Fasern können auch angewandt werden, um Algen oder andere Mikroorganismen zu kultivieren und sie zur Produktion von Substanzen/Verbindungen oder Gasen mit einer gesteigerten Effizienz zu nutzen. Erfindungsgemäß hergestellte cellulose-basierte Fasern sind insbesondere geeignet für die Herstellung von Lotionen/Cremes/Salben oder Pasten für Anwendungen an Haut oder Schleimhäuten. Dabei ermöglichen sie bei diesen einen verbesserten Wasserrückhalt an der Oberfläche von Haut und Schleimhäuten sowie eine verbesserte Emulgierbarkeit hydrophiler und lipophiler Verbindungen sowie die Einbringbarkeit von Verbindungen, wie Antioxidantien oder Lichtschutz-Verbindungen und führen zu einem verbesserter Glattheit der Haut und Schleimhautareale.

Lignin-reiche Schalenanteile sind beispielsweise verwendbar zur Adsorption und/oder Lagerung/Transport von Lipidphasen. Ferner bevorzugt ist ihre Anwendung zur Verbesserung der Wasserbindungskapazität von Erden, insbesondere von Kulturböden. Ferner sind sie verwendbar zur Formulierung von Tiernahrungserzeugnissen.

### Figur

### Schema 1:

Beispiel einer Verfahrensausführung mit Recycling der Prozesswasserphasen. Die Verfahren der Verfahrensschritte I werden zur Behandlung des Hauptroms und die der Verfahrensschritte II zur Behandlung des/der Nebenströme durchgeführt. Das Ausgangsmaterial wird aus dem Vorratsbehälter V1 in den Reaktioncontainer R1 gefüllt. Aus dem Vorratstank V2, wird eine Wasserphase, in der Aminosäuren und/oder Peptide gelöst vorliegen (A/P-Lösung), in den Reaktionscontainer R1 gegeben und mit dem Ausgangsmaterial gemischt. In dem Verfahrensschritt 2b) wird eine Wasserphase aus dem Vorratsbehälter V3 in den Reaktionscontainer R 1 gefüllt und eine Mischung des Reaktionsgemisches vorgenommen. In der Schritt 3 erfolgt eine Separation solider wasserunlösliche Feststoffe mit einer Phasentrennvorrichtung, die erhaltbaren soliden wasserunlösliche Feststoffe werden dem Reaktionscontainer R 3 und die Flüssigphase dem Reaktionscontainer R2 zugeleitet. In der Schritt 4 wird dem Reaktionscontainer R2 eine wässrige Lösung, enthaltend Kondensierungsmittel zugeleitet und die Phasen gemischt. In der Schritt 5 erfolgt eine Separation und Kompaktierung der kondensierten wasserlöslichen Verbindungen mit einer Phasentrennvorrichtung. Die erhaltbare Phase mit kompaktierten wasserlöslichen Verbindungen wird in den Produktcontainer P1 gefüllt. Die separierte geklärte Prozesswasserphase wird in den Vorratstank V5 oder V5a geleitet. Anschließend sind die folgenden Verfahrensabfolgen möglich:
1. Weiterleitung der geklärten Prozesswasserphase (PWP) aus V5a in den Reaktorcontainer R3, indem in der Schritt 3-I.a eine Mischung mit den in der Schritt 3) separierten soliden Feststoffen erfolgt. Anschließend Separation einer Fraktion solider wasserunlösliche Feststoffe in der Schritt 3-I.b.. Die separierten wasserunlösliche Feststoffe werden in den Produktcontainer P2 gefüllt. Das Eluat/Filtrat dieser Schritt wird in der Schritt 3-I.c einem Wirbelstromseparationsverfahren zugeleitet und die voneinander separierten wasserunlösliche Feststoffe werden mittels einer Separationstechnik von der Wasserphase abgetrennt und in die Produktcontainer P 3 und P4 gefüllt.
   Die PWP werden zusammen oder getrennt in den Vorratstank V5b geleitet.
2. Weiterleitung der PWP aus Vorratstank V5 oder V5b in den Reaktionscontainer R4, in dem Verfahrensschritt 6 ausgeführt wird. Anschließend wird die behandelte PWP des Verfahrensschritts 6 in den Vorratstank V5c geleitet.

Für die Wiederverwendung von PWP können die geklärte und gereinigte PWP des Vorratstanks V5c, in dem sich in einer Verfahrensausführung auch die geklärte, wiederverwendete und dann gereinigte PWP befinden kann, sowie die PWP aus Vorratstank V5b, enthaltend die geklärte weiterverwendete PWP der Schritt 3-I.c, eingesetzt werden. Die Einleitung der PWP in einer weiteren Prozessdurchführung erfolgt wahlweise in der Vorratstank V2 und/oder V3.

### Beispiele

### Beispiel 1:

### Untersuchungen zum Aufschluss von pflanzlichen Press- und Mahlprodukten

Jeweils 500g von Rapspresskuchen (RPK) in Form von Pellets mit einem Restölgehalt von 9% sowie jeweils 500g Mehl von getrockneten Linsen (LM) mit einer mittleren Korngröße von 200µm wurde in Bechergläser gefüllt. Es erfolgte eine Untersuchungsserie, bei der der zeitliche Verlauf und die Aufnahmemenge von wässrigen Aufschlusslösungen untersucht wurden. Hierzu wurden in der Versuchsserie A) den Presskuchen-pellets sowie dem Mehl zunächst 250ml der wässrigen Lösungen hinzugegeben und der Inhalt der Bechergläser mit einem Knet-Rührer langsam gemischt. Sobald keine freie Wasserphase mehr sichtbar war, wurden jeweils 25ml der entsprechenden wässrigen Lösungen hinzugegeben. Diese Prozedur wurde solange durchgeführt, bis sich ein homogener Brei gebildet hatte, dem keine flüssige Phase aufschwamm. Die Untersuchung wurde nach 6 Stunden beendet, sofern das Untersuchungsziel nicht bereits erreicht worden war. Mit der in der Versuchsserie A) jeweils ermittelten Menge der wässrigen Lösungen, die vollständig aufgenommen wurde, erfolgte eine weitere Untersuchungsserie (B), bei der die ermittelten Flüssigkeitsmenge unmittelbar dem Presskuchen oder dem Mehl hinzugegeben wurden und eine Mischung mit dem Knet-Rührer über eine um jeweils um 15 Minuten ansteigende Zeitdauer, für eine Gesamtdauer von 6 Stunden, erfolgte. Im Folgeversuch B1)wurden jeweils 10g der Masse, die zum Ende jedes Untersuchungszeitraum der Untersuchungsserie B) vorlagt, in einem schmalen Glas-Messzylinder in 90ml Wasser gelöst und das Gemisch gut geschüttelt. Anschließend wurde das Sedementierverhalten der sichtbaren Bestandteile beobachtet. In einem weiteren Folgeversuch B2) wurden jeweils 10g der wie für B1) gewonnenen Gemische in 90ml Wasser durch schütteln gelöst und anschließend durch ein Vibrationssieb mit einer Maschenweite von 100µm gelassen. Der Siebrückstand wurde in einem Vakuumtrockenschrank bis zur vollständigen Trockenheit getrocknet und dann gewogen. Anhand der ermittelten Werte wurde der Zeitpunkt ermittelt, bei dem die geringste Feststoffmenge erhalten wurde. Der Siebrückstand der Wiederholungsversuche wurde aufsicht-mikroskopisch untersucht. Dabei wurde bewertet, ob die Partikel zusammenhängen und Anhaftungen von organischen löslichen Verbindungen erkennbar sind sowie die Morphologie der Partikel beurteilt.

Es wurden die folgenden wässrigen Lösungen angesetzt und verwendet: 1) Entionisiertes Wasser, 2) 0,1 molare Natronlauge, 3) SDS 3 Gew%, 4) Arginin 300mmol/l, 5) Lysin 300mmol/l, 6) Histidin 300mmol/l,

### Ergebnisse:

Durch eine Beaufschlagung mit Wasser zerfiel der Presskuchen in große Partikel, es kam praktisch zu keiner Lösung löslicher Bestandteile, sodass keine vollständige Lösung der Partikel im Untersuchungszeitraum stattfand. Daher konnte das erforderliche Flüssigkeitsvolumen zur vollständigen Lösung nicht ermittelt werden. RPK und LM, die mit den Aufschlusslösungen 2) - 6) aufgeschlossen wurden und als homogene breiige Masse vorlagen, zeigten in einem wässrigen Verteilungsvolumen einen Zerfall in lösliche und unlösliche korpuskuläre Bestandteile. Bei den Mischungen, die mit den Aufschlusslösungen 2) und 3) hergestellt worden waren, entstand im Untersuchungszeitraum ein grobkörniger Brei, die maximal aufgenommene Flüssigkeitsmenge war geringer, als die bei Verwendung der Aufschlusslösungen 4) - 6). Bei der Verteilung im Versuch B1) sedimentierten die korpuskulären soliden Bestandteile von RPK und LM rasch bei den Lösungsansätzen 4)-6), unter Ausbildung einer schwarzen Feststoffschicht, die sich am Boden befand, einer darüber liegenden beige-farbenen Feststoffschicht und einer darüber befindlichen homogenen gelben Suspension. Bei der Verteilung der Lösungsansätze 2) und 3) setzten sich rasch große Partikel ab, kleinere Aggregate sedimentierten langsamer, sodass der Sedimentationsprozess erheblich später abgeschlossen war, als dies nach Aufschluss mit den Verbindungen 3) -6) der Fall war. Ferner bestand keine Aufschichtung der verschieden-farbenen Partikel in der Sedimentphase. In der Untersuchungsserie B2) war der minimal erreichbare Siebrückstandsmasse deutlich geringer bei Proben, die mit den Aufschlussverbindungen 4) - 6) behandelt worden waren, als bei Proben, die mit den Lösungen 2) und 3) behandelt worden waren. Auch nach der maximalen Einwirkdauer der Lösungen 2) und 3) war der erhaltbare Siebrückstand der Aufschlussphasen deutlich größer als der der mit den Aufschlusslösungen 4)-6) nach 30 Minuten erreicht worden war. In der mikroskopischen Analyse wurden zu allen Untersuchungszeitpunkten in den Präparaten, die mit den Aufschlusslösungen 1) - 3) angesetzt worden waren zusammenhängende Aggregate aus zahlreichen kleineren Partikel gefunden. Ferner waren die Aggregate oder Partikel von einer organischen Schicht überwiegend eingeschlossen, der Verbackungs- und Belegungsgrad korrelierte mit dem ermittelten Trockengewicht dieser Proben. Im Gegensatz hierzu waren nach einer Aufschlusszeit zwischen 10 (LM) und 30 (RPK) Minuten in den Proben, die mit den Aufschlusslösungen 4) - 6) behandelt worden waren, keine zusammenhängende Aggregate von Partikel vorhanden und die Partikel lagen vereinzelt vor. Auch befanden sich nur ausnahmsweise Anhaftungen von organischem Material an den Oberflächen der Partikel. Es wurden in diesen Präparaten watteartige oder korallenartige Gewebestrukturen entdeckt, die in einer späteren Analyse sich als cellulose-basierte Fasern herausstellten. Daneben waren Schalenanteile identifizierbar, die sich in einer späteren Analyse als lignin-reiche Schalenanteile herausstellten. Des Weiteren konnten helle Partikel unterschiedlicher Konfiguration identifiziert werden, die sich in einer späteren Analyse als Stärkeaggregate darstellten.

### Beispiel 2

### Untersuchung zu Aufschlussbedingungen bei pflanzlichen Ausgangsmaterialien.

Die folgenden Pressrückstände, die in Form von Pellets vorlag und Mahlprodukte, die in Form eines Mehls vorlagen, mit dem jeweils angegebenen Gehalt der Hauptinhaltsstoffe, wurden untersucht: Sojapresskuchen (SPK): Proteine 38Gew%, Kohlenhydrate 26 Gew-%, Faserstoffe 21Gew-%, Öl 11 Gew-%, sonstige 4 Gew-%; Rapspresskuchen (RPK): Proteine 35 Gew%, Kohlenhydrate 21 Gew-%, Faserstoffe 30Gew-%, Öl 9 Gew-%, sonstige 5 Gew-%; Jatropha-Presskuchen (JPK): Proteine 32 Gew%, Kohlenhydrate 22 Gew-%, Faserstoffe 25 Gew-%, Öl 13 Gew-%, sonstige 8 Gew-%; Hafermehl (HM): Proteine 40Gew%, Kohlenhydrate 30 Gew-%, Faserstoffe 18 Gew-%, Öl 8 Gew-%, sonstige 4 Gew-%; Linsenmehl (LM): Proteine 33Gew%, Kohlenhydrate 33 Gew-%, Faserstoffe 25Gew-%, Öl 6 Gew-%, sonstige 3 Gew-%. Es wurde zunächst die erforderliche Aufschlussdauer ermittelt, indem jeweils 50g der Ausgangsprodukte in Gläsern mit 1000ml einer 300mmolare Lösungen a) Arginin 0,2 molar, b) Histidin und Lysin jeweils 0,1 molar, c) Poly-Arginin 0,1 molar und Glutaminsäure 0,1 molar, d) NH₄ 0,2 molar, e) KOH, 0,2 molar, f) Harnstoff 0,3 molar, bei einer Durchmischungsfrequenz von 50/min aufgeschlossen wurden. Dabei wurde durch Beobachtung untersucht, wann keine sichtbaren Feststoff-Aggregate in der sich bildenden Suspension mehr vorlagen. Die Suspension wurde sodann durch ein Vibrationssieb mit einem Siebmaß von 100µm gelassen und der Filterrückstand mikroskopisch, gemäß Beispiel 1, untersucht. Sodann wurde ein Test zur Bestimmung der minimal erforderlichen Volumenmenge für eine(n) vollständige(n) Durchdringung und Aufschluss der Ausgangsprodukte untersucht, indem zu je 100g der Produkte, beginnend mit einem Gewichtsverhältnis von 1:1, eine um jeweils 50ml ansteigende Menge der Aufschlusslösungen hinzugegeben wurde, unter langsamer Durchmischung über die in der Voruntersuchung ermittelte Zeitdauer, die für einen vollständigen Aufschluss für die jeweilige Aufschlusslösung erforderlich war. Zum Ende der jeweiligen minimalen Einwirkdauer wurden Proben entnommen und bei 3000 U/Min. über 3 Minuten zentrifugiert. Ein ausreichendes Volumen, zur Herstellung einer vollständigen Quellung wurde für das Massenverhältnis zwischen der Ausgangsmaterial und der Aufschlusslösung festgelegt (P_{ref}), bei dem sich nach der Zentrifugation einer Probe nur eine minimale freie Flüssigkeitsschicht als Überstand darstelle. Je 10g der Ansätze, bei denen mit der minimal erforderlichen Volumenmenge der jeweiligen Ansätze sich eine maximal erreichbare Quellung eingestellt hatte, wurden in 90ml Stadtwasser gegeben, durch Schütteln verteilt und sodann durch ein Vibrationssieb mit einem Siebmaß von 100µm geleitet. Das Eluat wurde durch ein 10µm Feinstsieb gelassen. Der jeweilige Filterrückstand wurde in Wasser suspendiert und die hierin vorhandenen partikulären Strukturen nach einer identisch vorgenommenen Filtration mikroskopisch (Versuchsdurchführung gemäß Beispiel 1) analysiert. Der Siebrückstand wurde bei einer Versuchswiederholung getrocknet und die Substanzmenge der zurückgehaltenen Partikel ermittelt. In einer weiteren Untersuchung wurden 100g der Masse des Ansatzes P_{ref} in 900ml Wasser mit einen Laminarmischer für 5 Minuten durchmischt. Die Suspension wurde dann durch ein Schwingsieb geleitet. Aus dem Eluat (Eluat 1) wurde eine 10ml Probe zur Bestimmung des Stickstoffgehalts entnommen. Der Siebrückstand wurde in einer Kammerfilterpresse von gebundenem Wasser befreit und der Restfeuchtegehalt bestimmt. Dann wurde der Pressrückstand in einer 0,5 molaren NaOH-Lösung suspendiert und über 1 Stunde gemischt. Die Suspension wurde erneut durch das Schwingsieb geleitet und der Filterrückstand mit einer Kammerfilterpresse getrocknet. Bei den erhaltenen Eluaten (Eluat 2) wurde der Gehalt an stickstoffhaltigen Verbindungen analysiert und der relative Anteil zu der Menge stickstoffhaltiger Verbindungen, die im Eluat 1 enthalten waren, berechnet. Ferner wurde das Massenverhältnis zwischen dem Proteingehalt der in Eluat 1 bei den einzelnen Untersuchungszeitpunkten bestimmt wurde und dem Proteingehalt, der im Eluat 1 bei dem eine maximale Quellung (ZP Qmax) vorlag bestimmt.

Mit dem Eluat 1 der verschiedenen Ausgangsprodukte erfolgten Untersuchungen zur Gewinnung einer Proteinfraktion. Hierzu wurden zu jeweils 10 ml des Eluates 1, tropfenweise die folgenden Lösungen hinzugegeben: 1) Zitronensäure, 2) Milchsäure, 3) Aluminiumchlorid, 4) Kalziumchlorid, jeweils als 10 Gew%ige Lösung. Dabei wurde der Behältnisinhalt leicht agitiert. Sobald nach einer diskontinuierlich erfolgenden Zugabe deutlich erkennbare wolkige oder flockenartige Strukturen sichtbar wurden, erfolgte vor der weiteren Zudosierung eine Untersuchung auf die Vollständigkeit der Kondensierbarkeit gelöster organischer Verbindungen. Hierzu wurde eine Probe (2ml) aus dem Reaktionsgemisch entnommen und zentrifugiert. Zu dem Überstand wurde eine kleine Menge (50µl) das Kondensierungsmittel zugesetzt und hiermit gemischt. Sofern keine weitere Bildung erkennbarer Strukturen vorlag, war eine ausreichende Dosierung des Kondensierungsmittels gegeben und die Zugabe von Kondensierungsmitteln wurde gestoppt. Nach 15 Minuten Standzeit erfolgte eine Zentrifugation mit 3000/Min. Es wurde der pH des Überstandes bestimmt und eine Untersuchung des Trübungsgrades sowie auf das Vorliegen von Schwebstoffen durchgeführt. Der entstandene Feststoff wurde separiert und das Trockengewicht bestimmt. Anschließend wurde bei der erhaltenen Trockenmasse der Proteingehalt (Bestimmungsdurchführung siehe Analyseverfahren) ermittelt. Der ermittelte Wert wurde in Bezug gesetzt zum Proteingehalt, der in P_{ref} ermittelt wurde.

### Ergebnisse:

Trotz eines signifikant größeren Quellvolumens das bei einem Aufschluss mit den Lösungen a) - c), im Vergleich zu den Lösungen d) - f) vorlag (+160 bis + 240 Gew% vs. + 80 bis +140 Gew%) war die Zeitdauer, um dies zu erreichen, signifikant kürzer (8 bis 20 Minuten vs. 45 bis 300 Minuten). Im Siebrückstand (Siebmaß 100µm) nach Verteilung der Proben der Aufschlussgemische zum Zeitpunkt der maximalen Quellung in einem Verteilungsvolumen, die durch einen Aufschluss mit den Lösungen a) - c) hergestellt worden waren, zeigten sich in der mikroskopischen Analyse keine Aggregate von soliden Feststoffen, die praktisch frei waren von anhaftenden löslichen organischen Resten. Im Gegensatz hierzu waren im Siebrückstand der Aufschlussgemische, die mit den Lösungen d) -f) hergestellt worden waren zum ZP Q max., zahlreiche Aggregate/Konglomerate von soliden Feststoffen, die teilweise vollständig von einer organischen (wasserlöslichen) Masse eingeschlossen waren. Im Gegensatz zu den Siebrückständen der Proben, die mit den Lösungen a) - c) erhalten worden waren, bei denen großvolumige und expandierte cellulose-basierte Fasern vorlagen, waren solche nur vereinzelt und gering expandiert erkennbar. Auf dem Feinstfilter (Siebmaß 10µm) des Eluates der zuvor erfolgten Filtration waren praktisch keine partikulären Strukturen nach einem Aufschluss mit den Lösungen a) bis c) zu erkennen, während es bei den Eluaten, die aus einem Aufschluss mit den Lösungen d) bis f) erhalten worden waren, zahlreiche Feststoffpartikel vorlagen, die teilweise für eine Verlegung der Filterfläche führten; diese Partikel waren überwiegend cellulose-basierte Fasern, die eine starke Belegung mit organischen Verbindungen aufwiesen. Das Trockengewicht der Siebrückstande nach Aufschluss und Verteilung der wasserlöslichen und gelösten Konstituenten war bei den Proben, die aus dem Aufschluss mit den Lösungen d - f) erhalten worden waren, signifikant größer, als bei denen, die durch einen Aufschluss mit den Lösungen a) - c) erhalten wurden (+ 130 bis + 350 Gew%). Der Proteingehalt im Eluat 1 zum ZP Qmax (sowie zu allen anderen Messzeitpunkten) war signifikant höher, wenn ein Aufschluss der Ausgangsmaterialien mit einer der Lösungen a) - c) erfolgt war (58 bis 82 Gew%), als nach Aufschluss mit den Lösungen d) - f) (49 bis 56 Gew%). Durch einen Aufschluss des Siebrückstands mit einer Lauge wurden bei dem Material, das nach einem Aufschluss mit den Lösungen a) bis c) erhalten worden war, praktische keine Proteine mehr freigesetzt, während im Siebrückstand des Aufschlussgemisches nach Ansatz mit den Lösungen d) bis f) zwischen 8 und 22 Gew% an Proteinen herausgelöst wurden.

Mit den Aggregationsmitteln konnte im proteinhaltigen Eluat 1, das nach einem Aufschluss mit den Lösungen a) bis c) erhalten worden war, bereits nach Hinzugabe geringer Volumina, eine Aggregation/Kondensierung in Form von großvolumigen wolkenartige Strukturen beobachtet werden, die zu einer Klärung der zuvor stark trüben Wasserphasen führten und bei denen die Aggregate/Kondensate nur sehr langsam sedimentierten. Die Volumina die für eine vollständige Aggregation/Kondensation ausreichend waren betrugen für die Lösungen 1-4. zwischen 2 und 12 Vol%. Im Gegensatz hierzu waren zur Aggregation/Kondensierung der Eluate nach einem Aufschluss mit den Lösungen d) -f) deutlich höhere Volumenzusätze erforderlich bzw. eine Klärung der der Wasserphase nicht möglich/erreichbar (Aggregationslösung 4 ohne Effekt, daher ohne Ergebnis)(Zugabevolumen zwischen 15 und 26 (maximal zulässiges Dosiervolumen) Vol%). Der pH der geklärten Wasserphasen der Eluate, die nach Aufschluss mit den Lösungen a) bis c) erhalten worden waren lag in einem Bereich zwischen 6,8 und 7,5. Im Gegensatz hierzu lag der pH-Bereich zwischen 3,8 und 5,2, nach einer Zugabe der Aggregationslösungen 1-3, bei denen es zu einer Aggregation/Kondensation kam, bei den Eluaten, die mit den Aufschlusslösungen d) bis f) hergestellt worden waren.

### Beispiel 3

### Untersuchung zur Prozessführung bei Wiederverwendung von Prozesswasserphasen.

Im Prozessschritt 1) wurden 100 kg Raps-Pressrückstand der durch eine Schneckenpressung zur Abtrennung der Ölfraktion erhalten wurde verwandt, mit einem Gehalt der folgenden Grundkomponenten: Protein 45%, Kohlenhydrate 32%, Faserstoffe 12%, Schalen 8%, Fette 2% und in einen Reaktorcontainer (R1) gegeben. Hinzugegeben und untergemischt wurde in der Prozessstufe 2a) 150l einer wässrigen Lösung in der die folgenden Aminosäuren gelöst im Vorlagetank 1 (V1) vorlagen: Arginin 0,3molar, Lysin 0,2molar, Cystein 0,2molar. Es wurde eine homogene Mischung mit einem Knetrührer im R1 vorgenommen. Nach einer Standzeit von 5 Stunden bei 20°C wurden im Prozessschritt 2b) jeweils 10kg der feuchten Masse in einen weiteren Reaktor (R1a) befördert. Für die erste Verteilungsphase wurden 100 I Stadtwasser, die in dem Vorratstank V2 vorlagen, in den Reaktorcontainer R1a) gegeben und mit einem Propellerrührer eine Suspendierung der Aufschlussmasse vorgenommen. Mittels einer Pumpe wurde die Suspension im Bypass durch eine Kolloidmühle geleitet, durch die eine Intensivmischung erfolgte. Anschließend Durchleitung der Suspension durch eine 3-fach Vibrationssiebeinheit Mod. 450LS18S33 (Sweko, Deutschland) bestehend aus einem 450µm, 100µm und einem 20µm Sieb im Verfahrensschritt 3. Das Filtrat wurde in den Reaktorcontainer R2 geleitet. Die mit den verschiedenen Filtern ausgetragenen Filterrückstände wurden vereinigt und in einer Kammerfilterpresse entwässert. Die Pressflüssigkeit wurde dem Reaktionscontainer R2 zugeleitet. Der gepresste Filterrückstand wurde im Nebenstromverfahrensprozessschritt 3-la in den Reaktionscontainer R3 gefüllt und beim ersten Verfahrensdurchlauf mit Stadtwasser in einem Verhältnis von 10:1 bis zur vollständigen Suspension gemischt. In subsequenten Prozessabläufen erfolge eine Einspeisung dieses Wasservolumens aus dem Vorratstank V5a. Die Suspension wurde im Nebenstromprozessschritt 3-lb durch ein Schwingsieb (Siebmaße 500) geleitet und die erhaltene Suspension anschließend in dem Nebenstromprozessschritt 3-lc in einem Hydrocyclon (Akavortex, AKW, Deutschland) mit einem Druck von 1,5 bar gepumpt. Der Differenzdruck betrug 1 bar. Die Unterlauf- sowie die Oberlaufphasen werden jeweils einem 2-fach Schwingsieb (125µm und 20µm bzw. 200 und 20 µm) aufgegeben. Die beiden Filtrate (PWP 2) werden vereinigt und in den Vorratstank V5b geleitet. Die Filterrückstände werden separat einer Kammerfilterpressung unterzogen und anschließend in die Produktcontainer P2 bis P4 gefüllt. Das Filtrat der Filterpresse wurde ebenfalls in den Vorratstank V5b) eingeleitet.

Im Prozessschritt 4) wurde die wässrige Lösung von Aggregierungsmitteln (Zitronensäure 30 Gew%) durch eine Dosiereinheit in den Reaktionscontainer R2 eingeleitet und mittels einer Rührvorrichtung untergemischt. Der Prozessfortschritt wird visuell und mittels einer kontinuierlichen pH-Metrie überwacht. Es sollte ein pH des Reaktionsgemisches von 6,6 nicht unterschritten werden. Nach einer Verweildauer von 1 Stunde war eine Sedimentation von organischen Kondensaten abgeschlossen und die Suspension wurde im Verfahrensschritt 5 durch den konischen Bodenauslass des Reaktionscontainers einem Dekanter (Pirallisi, Baby II/ 2800 g) zugeleitet. Die kondensierte und kompaktierte Proteinmasse wurde in den Produktcontainer P1 gefüllt. Die separierte Prozessflüssigkeit wurde in den Vorratstank 5a geleitet.

Die aus dem Nebenstromprozess erhaltene Prozesswasserphase 2 im Vorratstank V5b wurde dem Reaktionscontainer R4 geleitet. Nach der Ausleitung wurde das gereinigte Prozesswasser in den Vorratstank V5c geleitet und bis zur Wiederverwendung gelagert.

In weiteren Ansätzen, wurde wie beschrieben mit dem Aufschlussgemisch aus Reaktor 1 verfahren, wobei zum Zwecke der Wiederverwendung der Prozessflüssigkeiten die Prozessführung wie folgt verändert wurde: In den subsequent durchgeführten Prozessschritten V2a wurden das zum Lösen der eingestehen Aufschlussverbindungen erforderliche Wasser aus dem Vorratstank V5c dem Vorratstank V2 zugeleitet. Das in dem Vorratstank V5b befindliche Prozesswasser wird in den Vorratstank V3 geleitet und bis zu erforderlich Verteilungsvolumen für den durchzuführenden Verfahrensschritt bei Bedarf mit Stadtwasser aufgefüllt wird. Ferner erfolgt eine Einleitung der Prozesswasserphase, die im Vorratstank V5a gelagert ist zum Reaktionscontainer R3 in der Nebenstromprozessschritt 3-la.

Die Proteinfraktionen konsekutiver Prozessdurchläufe, die im Produktcontainer P1 vorlagen, wurden hinsichtlich der Zusammensetzung und der Trockenmasse untersucht. Die Feststofffraktionen, die in den Produktcontainer 2 bis 4 vorlagen, wurden über den weiteren Verlauf mikroskopisch (gemäß Beispiel 1) untersucht.

Die Proteinmasse des Produktcontainers P1 wurde mit Leitungswasser 1:1 verdünnt und in einen Vakuum-Sprühtrockner gepumpt. Es wurde ein blass gelbliches Pulver erhalten. Die Schalenfraktion des Produktcontainers P3 wurde mit einem Dekanter entwässert und anschließend mit einem Bandtrockner getrocknet. Die Faserfraktionen Produktcontainers P2 wurden auf einen Bandtrockner aufgegeben und getrocknet. Gleiches erfolgte mit der Produktfraktion aus P2.

### Ergebnisse:

Nach der initialen Einleitung von Frischwasser zur Durchführung der Hauptprozessschritte V2 und V3 konnten die im Anschluss an die jeweils erfolgten Abtrennungen der Lösung oder Suspension eingesetzten Wasserphasen zurückgewonnen und im Prozess wieder eingesetzt werden. Hierdurch konnte ein vollständiges Recycling der eingesetzten Wasserphasen erreicht werden. Die erhaltenen Fraktionen waren hinsichtlich ihrer Beschaffenheit und Zusammensetzungen im Verlauf der Untersuchungen nicht unterschiedlich. Die Proteinfraktion hatte einen Proteinanteil von 68Gew% (erste Abtrennung) bzw. 67Gew% (9. und letzte Abtrennung). Auch die Restfeuchte und das Trockengewicht der Proteinfraktion änderten sich im Verlauf der subsequenten Extraktionen nicht. Weder an den Schalen noch an den Fasern waren Anhaftungen von Proteinen oder Kohlenhydraten sichtbar.

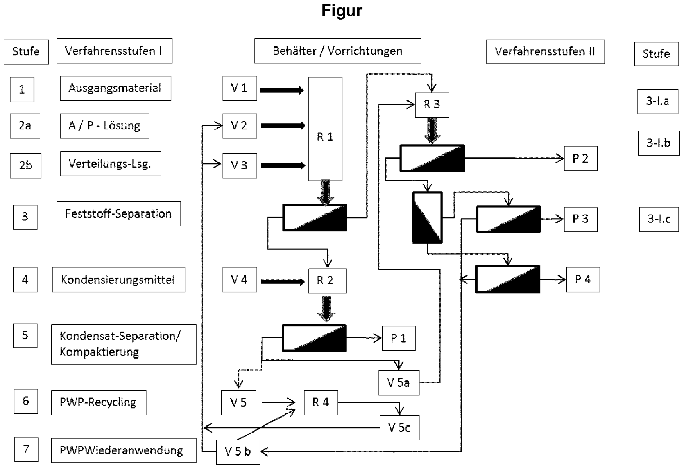

## Patentansprüche

1. Verfahren zur Ab- und/oder Auftrennung von Konstituenten bestehend aus
- wasserlöslichen und gelösten Verbindungen umfassend Proteine und/oder Kohlenhydrate und/oder Aromastoffe und/oder Farbstoffe und/oder Fette und/oder Toxine;
- optional wasserlöslichen und ungelösten Verbindungen umfassend Stärke;
- soliden Feststoffen umfassend cellulosebasierte Fasern und/oder ligninreiche Schalen; eines proteinhaltigen biogenen Ausgangsmaterials, wobei das Verfahren folgende Schritte umfasst:
1) Bereitstellen des proteinhaltigen biogenen Ausgangsmaterials,
2a) Versetzen des Ausgangsmaterials des Schritts 1) mit einer wässrigen Lösung, enthaltend mindestens eine gelöste Aminosäure mit einer molaren Masse von weniger als 400 g/mol und einer Löslichkeit von mindestens 35 g/L in Wasser bei 20°C und/oder Peptide aus 2 bis 50 dieser Aminosäuren zur Ab- und/oder Auftrennung der Konstituenten des proteinhaltigen biogenen Ausgangsmaterials,
2b) Zugabe eines wässrigen Verteilungsvolumens mit einem Gewichtsverhältnis zur Trockenmasse des proteinhaltigen biogenen Ausgangsmaterials von 3:1 bis 1.000:1 und Durchmischung zum Erhalt eines Verteilungsgemisches der ab- und/oder aufgetrennten Konstituenten aus Schritt 2a),
3) Separation der soliden Feststoffe aus dem Verteilungsgemisch des Schrittes 2b) unter Erhalt einer wässrigen Lösung der wasserlöslichen und gelösten Verbindungen ohne solide Feststoffe und ohne die optionalen wasserlöslichen und ungelösten Verbindungen,
4) Zugabe einer wässrigen Lösung enthaltend Aggregationsmittel und teilweise bis vollständige Aggregation der wasserlöslichen und gelösten Verbindungen umfassend Proteine und/oder Kohlenhydrate der wässrigen Lösung des Schritts 3) bis zum Erhalt einer Suspension aus den aggregierten Verbindungen, umfassend die Proteine und/oder Kohlenhydrate und einer wässrigen Phase, enthaltend die nicht aggregierten, wasserlöslichen und gelösten Verbindungen,
5) Trennung der Suspension des Schritts 4) und Kompaktierung der aggregierten Verbindungen durch Abscheidung von Wasser und Erhalt von kompaktierten aggregierten Verbindungen und einer geklärten wässrigen Phase, und optional Reinigung der geklärten wässrigen Phase,
6) Zugabe der geklärten wässrigen Phase aus Schritt 5) als wässrige Lösung dem Schritt 2a) und/oder als wässriges Verteilungsvolumen dem Schritt 2b), oder
Verwendung der geklärten wässrigen Phase aus Schritt 5) zur Reinigung der separierten soliden Feststoffe aus Schritt 3), oder
Verwendung der geklärten wässrigen Phase aus Schritt 5) zur Reinigung der separierten soliden Feststoffe aus Schritt 3) unter Erhalt einer wässrigen Waschphase und Zugabe der wässrigen Waschphase als wässrige Lösung dem Schritt 2a) und/oder als wässriges Verteilungsvolumen dem Schritt 2b).

2. Verfahren gemäß Anspruch 1 des weiteren umfassend nach Schritt 4) und vor Schritt 5) den Schritt 4a):
Abtrennung der aggregierten Proteine und nachfolgende Zugabe von weiterem Aggregationsmittels zur Aggregation der Kohlenhydrate gemäß Schritt 3).

3. Verfahren gemäß Anspruch 1 oder 2, wobei die mindestens eine gelöste Aminosäure gemäß Schritt 2a) eine molare Masse im Bereich von 70 g/mol bis 400 g/mol, bevorzugt von 75 g/mol bis 350 g/mol, weiter bevorzugt von 100 g/mol bis 320 g/mol, weiter bevorzugt von 140 g/mol bis 300 g/mol und/oder eine Löslichkeit von mindestens 75 g/L in Wasser bei 20°C, bevorzugt von mindestens 100 g/L in Wasser bei 20°C und weiter bevorzugt von mindestens 140 g/L in Wasser bei 20°C aufweist und/oder es sich um □-, □- oder □-Aminosäuren und/oder proteinogenen und/oder nicht proteinogenen Aminosäuren handelt.

4. Verfahren gemäß einem der Ansprüche 1 - 3, wobei das Versetzen des Ausgangsmaterials gemäß Schritt 2a) eine Durchtränkung bedeutet.

5. Verfahren gemäß einem der Ansprüche 1 - 4, wobei in Schritt 4) Verbindungen umfassend Kohlenhydrate, Phospholipide, Gylkolipide, Glykoglycerolipide, Antioxidantien, Vitamine der wässrigen Lösung des Schritts 3) zugesetzt werden und/oder bereits darin enthalten sind, die an die gelösten Proteine gebunden und zusammen mit den Proteinen aggregiert werden.

6. Verfahren gemäß einem der Ansprüche 1 - 5, bei dem in der Stufe 3) und/oder 4) die Löslichkeit von Toxinen und Gefahrenstoffen als wasserlösliche und gelöste Verbindungen in der wässrigen Lösung erhalten bleibt oder gesteigert wird.

7. Verfahren gemäß einem der Ansprüche 1 - 6, bei dem in der Stufe 2b) und/oder 3) und/oder 4) eine Separation von lipophilen Konstituenten des Ausgangsmaterials erfolgt, indem zusätzlich eine oder mehrere lipophile Verbindung(en) in dem Schritt 2a) und/oder 2b) dem Reaktionsgemisch hinzugegeben und mit diesem gemischt werden und/oder eine Entölung von Pflanzenproteinen bei Raumtemperatur und/oder erhöhter Temperatur erfolgt.

8. Verfahren gemäß einem der Ansprüche 1 - 7, bei dem in der Stufe 3) nach der Separation solider Feststoffe aus dem Verteilungsgemisch des Schrittes 2b) unter Erhalt einer faserfreien wässrigen Lösung der wasserlöslichen und gelösten Verbindungen des Ausgangsmaterials, aus den separierten soliden Feststoffen proteinfreie komplexe Kohlenhydrate und/oder Stärkekörner erhaltbar sind.

9. Verfahren gemäß einem der Ansprüche 1 - 8, bei dem in der Stufe 3) nach der Separation solider Feststoffe aus dem Verteilungsgemisch des Schrittes 2b) unter Erhalt einer faserfreien wässrigen Lösung der wasserlöslichen und gelösten Verbindungen des Ausgangsmaterials, aus den separierten soliden Feststoffen cellulose-basierte Faserstoffe, lignin-reiche Schalenteile, und/oder komplexe/komplexierte Kohlenhydrate erhalten werden.

10. Verfahren gemäß einem der Ansprüche 1 - 9, bei dem in Schritt 3) die soliden Feststoffe und die wasserlöslichen und gelösten Verbindungen des Ausgangsmaterials mittels filtrativer Separationstechniken getrennt werden.

11. Verfahren gemäß einem der Ansprüche 1 - 10, bei dem in Schritt 3) eine faserfreie wässrige Lösung erhalten wird, mit den wasserlöslichen und gelösten Verbindungen des Ausgangsmaterials, die frei ist von soliden Feststoffen.

12. Verfahren gemäß einem der Ansprüche 1 - 11, wobei in Schritt 4) der pH-Wert der wässrigen Lösung des Schritts 3) auf einen pH-Wert im Bereich zwischen 6 und 8 eingestellt wird.

13. Verfahren gemäß einem der Ansprüche 1 - 11, bei dem in Schritt 4) gelöste Kohlenhydrate und/oder Phospholipide und/oder Glycoglycerolipide zusammen mit gelösten Proteinen aggregiert werden, wodurch Protein-Aggregate enthaltend Kohlenhydrate und/oder Phospholipide und/oder Glycoglycerolipide erhalten werden.

14. Geruchs- und geschmackstoffarme und/oder toxin- und gefahrstoffarme aggregierte Proteine, erhältlich nach einem der erfindungsgemäßen Verfahren gemäß eines der Ansprüche 1 - 13.

15. Cellulosebasierte Fasern, ligninreiche Schalen und/oder aggregierte Kohlenhydrate, erhältlich nach einem der erfindungsgemäßen Verfahren gemäß eines der Ansprüche 1 - 13.
